# EUROPEAN PATENT SPECIFICATION

(11) **EP 4 024 838 B1**
(45) Date of publication and mention of the grant of the patent: **28.01.2026**
(21) Application number: 20865842.7
(22) Date of filing: 31.07.2020
(51) Int. Cl.: H04M 1/72403, G06F 3/147, G06F 3/04886, G06F 1/16, H04M 1/02, G09G 5/14, G09G 5/36

(54) **DISPLAY METHOD FOR SIDE REGION OF SCREEN, AND ELECTRONIC APPARATUS**
ANZEIGEVERFAHREN FÜR SEITENBEREICH EINES BILDSCHIRMS UND ELEKTRONISCHES GERÄT
PROCÉDÉ D'AFFICHAGE POUR RÉGION LATÉRALE D'ÉCRAN, ET APPAREIL ÉLECTRONIQUE

(30) Priority: 17.09.2019 CN 201910876590
(43) Date of publication of application: 06.07.2022
(73) Proprietor: Huawei Technologies Co., Ltd., Shenzhen, Guangdong 518129 (CN)
(72) Inventor: ZHAO, Xiaohu, Shenzhen, Guangdong 518129 (CN); ZHENG, Aihua, Shenzhen, Guangdong 518129 (CN); SHI, Yuanchang, Shenzhen, Guangdong 518129 (CN); MA, Yuchi, Shenzhen, Guangdong 518129 (CN); TONG, Bifeng, Shenzhen, Guangdong 518129 (CN); TE, Rigele, Shenzhen, Guangdong 518129 (CN)
(74) Representative: Pfenning, Meinig & Partner mbB
(86) International application number: PCT/CN2020/106361
(87) International publication number: WO 2021/052035

(56) References cited:
- CN-A- 106 095 226
- CN-A- 106 095 226
- CN-A- 106 534 566
- CN-A- 107 580 039
- CN-A- 110 119 295
- US-A1- 2015 227 223
- US-A1- 2017 223 159
- US-A1- 2018 359 350

## Description

### TECHNICAL FIELD

This application relates to a display method for a side area of a screen, an electronic device, and a computer storage medium.

### BACKGROUND

Document US 2017/223159 A1 discloses a mobile terminal for using a display unit disposed on a lateral surface of a mobile terminal body and a control method thereof.

Document CN 110 119 295 A discloses a display control method which is applied to an electronic device provided with a foldable display screen.

Document CN 107 580 039 A discloses a transmission progress display method.

Document US 2015/227223 A1 discloses a user terminal device where a display is folded asymmetrically with reference to a folding line so as to expose a part of the display.

Curved screens and foldable screens are made of flexible plastic. Compared with flat screens, the curved screens and the foldable screens are more flexible and not easily broken. The curved screen uses non-rigid glass as a substrate, has better elasticity, is not easy to break, and is especially suitable for a mobile phone screen with a high touch rate. Therefore, electronic devices such as mobile phones configured with the curved screens or foldable screens are increasingly popular among users.

Currently, single images are displayed without flexibility on a side of a side screen and a side of a foldable screen in a folded form, which results in poor visual experience of users.

### SUMMARY

Embodiments of this application provide a display method for a side area of a screen, an electronic device, and a computer storage medium according to the independent claims, so that a dynamic effect associated with a current task may be displayed in the side area of the screen. In this way, the electronic device is more intelligent, and user experience is improved.

According to a first aspect, an embodiment of this application provides an electronic device, including: a first display, where the first display includes at least a main display area and at least one side display area, and the main display area and the at least one side display area are located on different planes, and are configured to display output of the first application; and a processor, configured to: when a first task of a first application is triggered, display, in the at least one side display area, at least one dynamic interface associated with the first task, wherein the dynamic interface is a dynamic image or a dynamic presentation of a text. Further, the at least one side display area comprises a first side display area and a second side display area; the processor is further configured to separately display a first dynamic interface and a second dynamic interface in the first side display area and the second side display area; and the processor is further configured to execute a first processing result of the first task based on a touch operation received in the first side display area, or execute a second processing result of the first task based on a touch operation received in the second side display area; wherein the first display is a curved display, the first side display area and the second side display area are curved areas on two sides of the curved display, and the main display area is a front area between the two sides of the curved display. Further, when the output of the first application is real-time updated information, the processor is further configured to update the at least one dynamic interface based on the real-time updated information; and the first task is a route navigation task, the real-time updated task information is a turning direction of the electronic device, and the turning direction of the electronic device indicates a turning direction of a user. Moreover, the electronic device is configured to determine whether a direction corresponding to the first side display area or the second side display area is consistent with the turning direction of the user; the electronic device is configured to display a dynamic interface indicating permission of communication or permission of advance in the first side display area and a dynamic interface indicating prohibition of passage or prohibition of advance in the second side display area, if the direction corresponding to the first side display area is consistent with the turning direction of the user; and the electronic device is configured to display the dynamic interface indicating permission of communication or permission of advance in the second side display area and the dynamic interface indicating prohibition of passage or prohibition of advance in the first side display area, if the direction corresponding to the second side display area is consistent with the turning direction of the user.

With reference to the first aspect, in a first possible implementation of the first aspect, the dynamic interface has at least one color, and the at least one color includes green or red.

In this implementation, the dynamic interface has at least red or green, so that the dynamic interface has a directivity represented by red or green. In this way, the electronic device is more intelligent, and user experience is improved.

With reference to the first aspect, in a second possible implementation of the first aspect, the dynamic interface includes at least a wave fluctuating interface or a thread rotating interface.

In this implementation, the dynamic interface is a wave fluctuating interface or a thread rotating interface, so that the dynamic interface is more interesting, and user experience is improved.

With reference to the first aspect, in a third possible implementation of the first aspect, the processor is further configured to display a main interface of the first task in the main display area when the first task is triggered.

In this implementation, when the dynamic interface is displayed on a side of a screen, the main interface is displayed in the main display area, so that more information about the first task may be displayed. In this way, user experience is improved.

With reference to the first aspect, in a fourth possible implementation of the first aspect, the at least one side display area is configured to receive a touch operation; and the processor is configured to execute a processing result of the first task based on the touch operation received in the at least one side display area.

In this implementation, a touch operation performed in a side display area on which a dynamic interface is displayed may trigger a processing result of a task, and this improves user experience.

The at least one side display area includes a first side display area and a second side display area. The processor is further configured to separately display a first dynamic interface and a second dynamic interface in the first side display area and the second side display area. The processor is further configured to execute a first processing result of the first task based on a touch operation received in the first side display area, or execute a second processing result of the first task based on a touch operation received in the second side display area.

In this implementation, touch operations performed in side display areas on which different dynamic interfaces are displayed may trigger different processing results of a task, and this improves user experience.

The first display is a curved display, the first side display area and the second side display area are curved areas on two sides of the curved display, and the main display area is a front area between the two sides of the curved display.

With reference to the fifth possible implementation of the first aspect, in a seventh possible implementation of the first aspect, the first task is any one of the following:
an incoming call notification task, a video call notification task, a voice call notification task, and an alarm start task.

When the output of the first application is real-time updated information, the processor is further configured to update the at least one dynamic interface based on the real-time updated information.

In this way, a dynamic interface may be updated based on real-time updated information of an application, and this improves user experience.

In this implementation, a dynamic effect that is associated with a result prompted by a task may be displayed in a side display area, and this improves user experience.

According to a second aspect, a display method for a side area of a screen is provided, used in an electronic device configured with a first display. The first display includes at least a main display area and at least one side display area, and the main display area and the at least one side display area are located on different planes, and are configured to display output of a first application. The method includes: when a first task of a first application is triggered, displaying, in the at least one side display area, at least one dynamic interface associated with the first task, wherein the dynamic interface is a dynamic image or a dynamic presentation of a text. Further, the at least one side display area comprises a first side display area and a second side display area; and the method further comprises: separately displaying a first dynamic interface and a second dynamic interface in the first side display area and the second side display area; and executing a first processing result of the first task based on a touch operation received in the first side display area, or executing a second processing result of the first task based on a touch operation received in the second side display area; wherein the first display is a curved display, the first side display area and the second side display area are curved areas on two sides of the curved display, and the main display area is a front area between the two sides of the curved display. Further, when the output of the first application is real-time updated information, the method further comprises: updating the at least one dynamic interface based on the real-time updated information; and the first task is a route navigation task, the real-time updated task information is a turning direction of the electronic device, and the turning direction of the electronic device indicates a turning direction of a user. Furthermore, the electronic device determines whether a direction corresponding to the first side display area or the second side display area is consistent with the turning direction of the user; the electronic device displays a dynamic interface indicating permission of communication or permission of advance in the first side display area and a dynamic interface indicating prohibition of passage or prohibition of advance in the second side display area, if the direction corresponding to the first side display area is consistent with the turning direction of the user; and the electronic device displays the dynamic interface indicating permission of communication or permission of advance in the second side display area and the dynamic interface indicating prohibition of passage or prohibition of advance in the first side display area, if the direction corresponding to the second side display area is consistent with the turning direction of the user.

With reference to the second aspect, in a first possible implementation of the second aspect, the dynamic interface has at least one color, and the at least one color includes green or red.

With reference to the second aspect, in a second possible implementation of the second aspect, the dynamic interface includes at least a wave fluctuating interface or a thread rotating interface.

With reference to the second aspect, in a third possible implementation of the second aspect, the method further includes: displaying a main interface of the first task in the main display area when the first task is triggered.

With reference to the second aspect, in a fourth possible implementation of the second aspect, the at least one side display area is configured to receive a touch operation. The method further includes: executing a processing result of the first task based on the touch operation received in the at least one side display area.

With reference to the second aspect, in a fifth possible implementation of the second aspect, the at least one side display area includes a first side display area and a second side display area. The method further includes: separately displaying a first dynamic interface and a second dynamic interface in the first side display area and the second side display area; and executing a first processing result of the first task based on a touch operation received in the first side display area, or executing a second processing result of the first task based on a touch operation received in the second side display area.

With reference to the fifth possible implementation of the second aspect, in a sixth possible implementation of the second aspect, the first display is a curved display, the first side display area and the second side display area are curved areas on two sides of the curved display, and the main display area is a front area between the two sides of the curved display.

With reference to the fifth possible implementation of the second aspect, in a seventh possible implementation of the second aspect, the first task is any one of the following:
an incoming call notification task, a video call notification task, a voice call notification task, and an alarm start task.

When the output of the first application is real-time updated information, the method further includes: updating the at least one dynamic interface based on the real-time updated information.

According to a third aspect, an embodiment of this application provides a computer storage medium. The computer storage medium includes computer instructions. When the computer instructions are run on an electronic device, the electronic device is enabled to perform the method according to the second aspect.

According to a fourth aspect, an example provides a computer program product. When program code included in the computer program product is executed by a processor in an electronic device, the method according to the second aspect is implemented.

According to the display method for a side area of a screen and the electronic device provided in embodiments of this application, when the electronic device performs a task, task-related dynamic effects can be displayed in the side area of the screen. This enriches display manners of the side area of the screen, makes the electronic device more intelligent, and improves user experience.

### BRIEF DESCRIPTION OF DRAWINGS

FIG. 1a is a bottom view of an electronic device according to an embodiment of this application;
FIG. 1b is an exploded view of an electronic device according to an embodiment of this application;
FIG. 1c is a display effect diagram of a side area of a screen according to an embodiment of this application;
FIG. 1d is a display effect diagram of a side area of a screen according to an embodiment of this application;
FIG. 1e is a display effect diagram of a side area of a screen according to an embodiment of this application;
FIG. 2a is a schematic diagram of a structure of an electronic device according to an embodiment of this application;
FIG. 2b is a schematic diagram of a structure of an electronic device according to an embodiment of this application;
FIG. 2c is a schematic diagram of a structure of an electronic device according to an embodiment of this application;
FIG. 2d is a schematic diagram of a structure of an electronic device according to an embodiment of this application;
FIG. 3 is a schematic diagram of a hardware structure of an electronic device according to an embodiment of this application;
FIG. 4 is a schematic block diagram of a software structure of an electronic device according to an embodiment of this application;
FIG. 5 is a flowchart of a display method for a side area of a screen according to an embodiment of this application;
FIG. 6 is a schematic diagram of interaction between an application and a system framework side according to an embodiment of this application;
FIG. 7 is a display effect diagram of a side area of a screen according to an embodiment of this application;
FIG. 8 is a display effect diagram of a side area of a screen according to an embodiment of this application;
FIG. 9 is a schematic block diagram of a software structure of an electronic device according to an embodiment of this application;
FIG. 10 is a flowchart of a display method for a side area of a screen according to an embodiment of this application;
FIG. 11 is a flowchart of a display method for a side area of a screen according to an embodiment of this application; and
FIG. 12 is a schematic diagram of a structure of an electronic device according to an embodiment of this application.

### DESCRIPTION OF EMBODIMENTS

The following describes the technical solutions in embodiments of the present invention with reference to the accompanying drawings. It is clearly that the described embodiments are merely some but not all of embodiments of this application.

In the description of this specification, "an embodiment", "some embodiments", or the like indicates that one or more embodiments of this application include a specific feature, structure, or characteristic described with reference to embodiments. Thus, phrases "in one embodiment", "in some embodiments", "in some other embodiments", "in some additional embodiments", and the like that appear in different parts in this specification do not necessarily mean referring to a same embodiment, but mean "one or more embodiments, but not all embodiments", unless otherwise specifically emphasized.

In the description of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" represents two or more.

The terms "first" and "second" in the description of this specification are merely intended for a purpose of description, and shall not be understood as an indication or implication of relative importance or implicit indication of a quantity of indicated technical features. Therefore, a feature limited by "first" or "second" may explicitly or implicitly include one or more features. Terms "include", "comprise", "have", and their variants all mean "include but are not limited to", unless otherwise specifically emphasized.

A display method for a side area of a screen provided in embodiments of this application may be used in an electronic device 100. The electronic device 100 may be a portable electronic device, for example, a mobile phone, a tablet computer, a personal digital assistant (personal digital assistant, PDA), a wearable device, and a laptop (laptop) computer. An example embodiment of the portable electronic device includes, but is not limited to, a portable electronic device carrying an iOS system^{∘,R}, an Android system^{∘,R}, a Microsoft system^{∘,R}, or another operating system. It should be further understood that, in some other embodiments of this application, the electronic device 100 may alternatively be a desktop computer with a touch-sensitive surface (for example, a touch panel), but not a portable electronic device. A type of the electronic device is not specifically limited in embodiments of this application.

The display method for a side area of a screen provided in embodiments of this application may be used in the electronic device 100. The electronic device 100 is configured with a display including a side display area and a main display area.

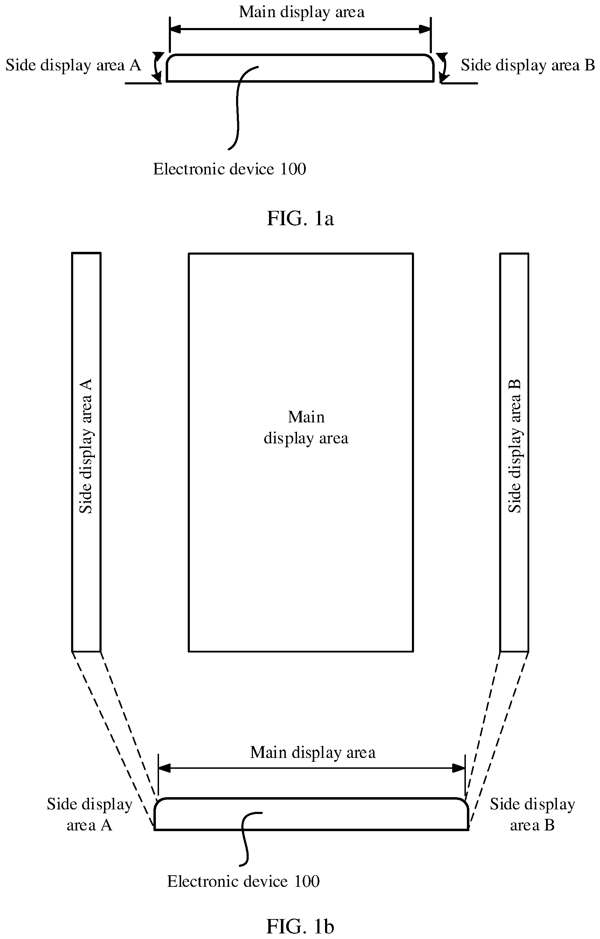

In some embodiments, the electronic device 100 is configured with a curved display. Refer to FIG. 1a and FIG. 1b. The curved display of the electronic device 100 may include a main display area, a side display area A, and a side display area B. The side display area A and the side display area B are two sides of the electronic device 100. The main display area is located between the side display area A and the side display area B. The main display area and the side display area A are located on different planes, and the main display area and the side display area B are located on different planes.

When a first task of a first application is triggered, a dynamic interface associated with the first task is displayed in one or two side display areas of the curved display. The dynamic interface is a dynamic effect in a user interface (user interface, UI) design, and is specifically a dynamic image, or is a dynamic presentation of a text. The dynamic image may be a concise dynamic image, for example, a wave fluctuating image, a thread rotating image, and the like.

In some embodiments, the first application may be an application running in the background. When the first task is triggered, the electronic device may display a main interface of the first task in the main display area. The main interface of the first task belongs to a running interface of the first application.

In some embodiments, the first application may be an application running in the foreground. Before the first task is triggered, the electronic device may display a running interface of the first application in the main display area. Before the first task is triggered, the electronic device may display a main interface of the first task in the main display area. The main interface of the first task belongs to the running interface of the first application.

The main interface may be a conventional interface of the first task. In the following embodiments, the main interface is specifically described with reference to a specific application scenario. Details are not described herein.

In some embodiments, the first task may be a task triggered by the electronic device when a preset condition is met. For example, for an alarm start task, when alarm start time comes, the alarm start task is triggered. For another example, for an incoming call notification task, when an incoming call request is received, the incoming call notification task is triggered. For another example, for a video call notification task of instant messaging, when a video call request of a friend is received, the video call request task is triggered. There are still other examples.

The first task may be a task in which the electronic device 100 executes different processing results in response to different touch operations that can be initiated by a user. The electronic device 100 may display a dynamic interface A in the side display area A and display a dynamic interface B in the side display area B, or may display the dynamic interface B in the side display area A and display the dynamic interface A in the side display area B. The dynamic interface A and the dynamic interface B have different operation directivities. The operation directivity indicates a processing result that can be triggered by a touch operation initiated by the user in a screen area in which the dynamic interface is displayed. In other words, a first dynamic interface and a second dynamic interface may indicate that touch operations performed in the side display area A and the side display area B may trigger different processing results of the first task. The processing result is a processing result of processing the first task by the electronic device 100 in response to a touch operation initiated by the user.

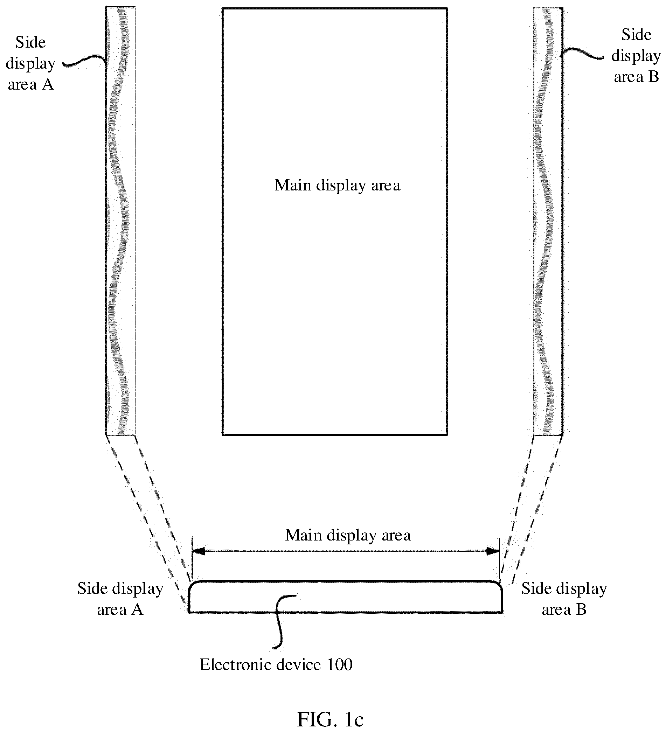

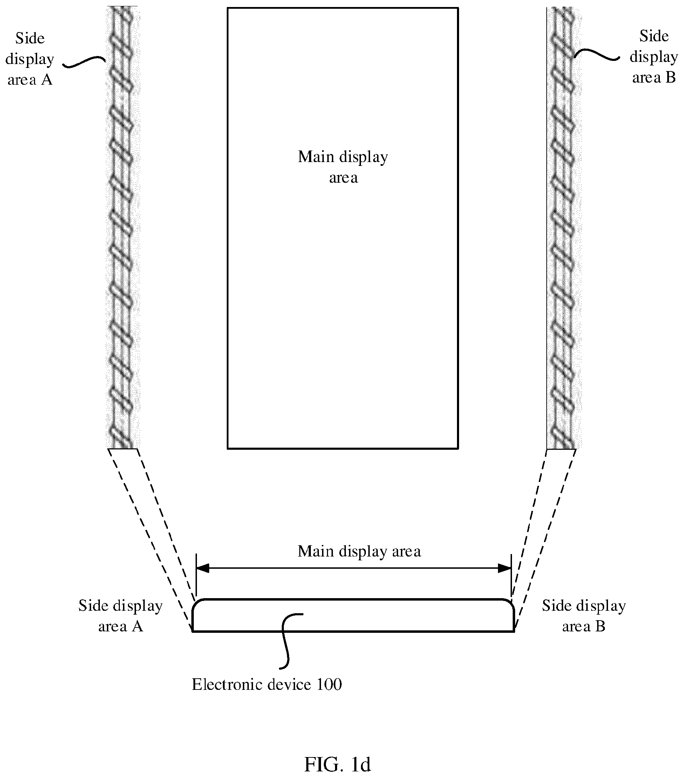

The dynamic interface A and the dynamic interface B may be dynamic interfaces with different colors and a same action type. In an example, the color of the dynamic interface A may be a cool color, and the color of the dynamic interface B may be a warm color. The color of the dynamic interface A may be one or a mixture of colors such as blue, green, cyan, and the like. The color of the dynamic interface B may be one or a mixture of colors such as red, yellow, orange, and the like. Refer to FIG. 1c. Both the dynamic interface A and the dynamic interface B may be dynamic interfaces of a wave fluctuating type. Refer to FIG. 1d. The dynamic interface A and the dynamic interface B may alternatively be dynamic interfaces of a thread rotating type. Other examples are not enumerated one by one herein.

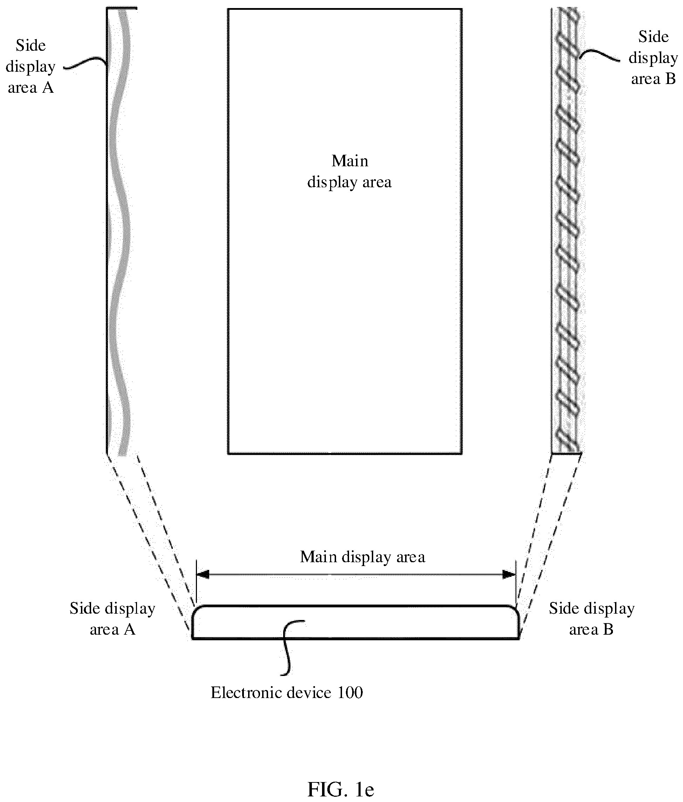

Action types of the dynamic interface A and the dynamic interface B may be different. For example, refer to FIG. 1e. The dynamic interface A may be a dynamic interface of a wave fluctuating type, and the dynamic interface B may be a dynamic interface of a thread rotating type. For another example, the dynamic interface A may be a dynamic interface in which a preset shape gradually emerges, and the dynamic interface B may be a dynamic interface in which a preset shape gradually disappears. Other examples are not enumerated one by one herein.

It should be noted that the foregoing describes the colors and action types of the dynamic interface A and the dynamic interface B as examples, and does not constitute a limitation. An application developer or an operating system developer may preset the dynamic interface A and the dynamic interface B.

In an example, the first task may be an alarm start task. When alarm start time set by the user comes, the electronic device 100 executes the alarm start task. A main interface of the alarm start task displayed in the main display area of the curved display may include a clock image, prompt information, later reminding time, and the like. It is easy to understand that, the electronic device 100 may generate a processing result of disabling an alarm in response to an operation initiated by the user to disable the alarm. The electronic device 100 may alternatively generate a processing result of starting an alarm later in response to a touch operation initiated by the user to start the alarm later. In other words, the user may process, in two manners, the alarm start task currently executed by the electronic device 100. In a first processing manner, the user disables the alarm. In the first processing manner, the electronic device 100 may disable the alarm in response to a touch operation initiated by the user to disable the alarm. In a second processing manner, the user may make the alarm start later, for example, make the alarm start after a preset period of time (the preset period of time may be a period of time recommended by an operating system of the electronic device, for example, 15 minutes or 20 minutes; or the preset period of time may be a period of time customized by the user when setting the alarm). In the second processing manner, the electronic device 100 may pause the alarm in response to a touch operation initiated by the user to indicate the alarm to start later, and then start the alarm after the preset period of time.

The dynamic interface A may correspond to the first processing manner of the alarm start task, and the operation directivity of the dynamic interface A may indicate that the user can disable the alarm by initiating an operation (for example, a swipe operation, a press operation, and a tap operation) in the screen area (for example, the side display area A or the side display area B) in which the dynamic interface A is displayed. In an example, the dynamic interface A may be a red dynamic interface, for example, may be a red dynamic interface in which an "X"-shaped pattern flows, a red dynamic interface in which a text of "Off" flows, a red dynamic interface in which a wave fluctuates, a red dynamic interface in which thread rotates, and the like.

The dynamic interface B may correspond to the second processing manner of the alarm start task, and the operation directivity of the dynamic interface B may indicate that the user can trigger the alarm to start later by initiating an operation (for example, a swipe operation, a press operation, and a tap operation) in the screen area (for example, the side display area B or the side display area A) in which the dynamic interface B is displayed. In an example, the dynamic interface B may be a green or blue dynamic interface, for example, may be a green or blue dynamic interface in which a "√"-shaped pattern flows, a green or blue dynamic interface in which a text of "Remind later" flows, a green or blue dynamic interface in which a wave fluctuates, a green or blue dynamic interface in which thread rotates, and the like.

In this example, representation forms of the dynamic interface A and the dynamic interface B are not specifically limited.

In an example, the first task may be an incoming call notification task. For example, when an incoming call application installed on the electronic device 100 receives an incoming call request, the electronic device 100 may execute the incoming call notification task. A main interface of the incoming call notification task displayed in the main display area of the curved display may include an incoming call number, a home location of the incoming call number, an avatar of an incoming call user, and the like. It is easy to understand that the electronic device 100 may generate a processing result of hanging up an incoming call in response to a touch operation initiated by the user to hang up the incoming call. Alternatively, the electronic device 100 may generate a processing result of answering an incoming call in response to a touch operation initiated by the user to answer the incoming call. In other words, the user may process, in two manners, the incoming call notification task currently executed by the electronic device 100. In a first processing manner, the user hangs up or rejects an incoming call. In the first processing manner, the electronic device hangs up or rejects the incoming call in response to a touch operation initiated by the user to hang up or reject the incoming call. In a second processing manner, the user answers an incoming call. In the second processing manner, the electronic device answers the incoming call in response to a touch operation initiated by the user to answer the incoming call.

The dynamic interface A may correspond to the first processing manner of the incoming call notification task, and the operation directivity of the dynamic interface A may indicate that the user can hang up or reject an incoming call by initiating a touch operation (for example, a swipe operation, a press operation, and a tap operation) in the screen area (for example, the side display area A or the side display area B) in which the dynamic interface A is displayed. In an example, the dynamic interface A may be a red dynamic interface, for example, may be a red dynamic interface in which a phone pattern shakes up and down or left and right, a red dynamic interface in which a text of "Hang up" flows, a red dynamic interface in which an "X"-shaped pattern flows, a red dynamic interface in which a wave fluctuates, a red dynamic interface in which thread rotates, and the like.

The dynamic interface B may correspond to the second processing manner of the incoming call notification task, and the operation directivity of the dynamic interface B may indicate that the user can answer an incoming call by initiating a touch operation (for example, a swipe operation, a press operation, and a tap operation) in the screen area (for example, the side display area B or the side display area A) in which the dynamic interface B is displayed. In an example, the dynamic interface B may be a green or blue dynamic interface, for example, may be a green or blue dynamic interface in which a phone pattern shakes up and down or left and right, a green or blue dynamic interface in which a text of "Answer" flows, a green or blue dynamic interface in which a "√"-shaped pattern flows, a green or blue dynamic interface in which a wave fluctuates, a green or blue dynamic interface in which thread rotates, and the like.

In this example, representation forms of the dynamic interface A and the dynamic interface B are not specifically limited.

In an example, the first task may be a video call notification (or voice call notification) task. For example, when an instant messaging application (WeChat^{®} , QQ^{®} , and the like) installed on the electronic device 100 receives a video call request (or voice call request), the electronic device 100 may perform the video call notification (or voice call notification) task. A main interface of the video call notification (or voice call notification) task displayed in the main display area of the curved display may include an avatar, a name, and the like of a video call request (voice call request) user. It is easy to understand that, the electronic device 100 may generate a processing result of rejecting a video call (or voice call) in response to a touch operation initiated by the user to reject the video call (or voice call). Alternatively, the electronic device 100 may generate a processing result of answering a video call (or voice call) in response to a touch operation initiated by the user to answer the video call (or voice call). In other words, the user may process, in two manners, the video call notification (or the voice call notification) task currently executed by the electronic device 100. In a first processing manner, the user rejects a video call (or voice call). In the first processing manner, the electronic device rejects the video call (or voice call) in response to a touch operation initiated by the user to reject the video call (or voice call). In a second processing manner, the user answers a video call (or voice call). In the second processing manner, the electronic device answers the video call (or voice call) in response to a touch operation initiated by the user to answer the video call (or voice call).

The dynamic interface A may correspond to the first processing manner of the video call notification (or voice call notification) task, and the operation directivity of the dynamic interface A may indicate that the user can reject a video call (or voice call) by initiating a touch operation (for example, a swipe operation, a press operation, and a tap operation) in the screen area (for example, the side display area A or the side display area B) in which the dynamic interface A is displayed. In an example, the dynamic interface A may be a red dynamic interface, for example, may be a red or blue dynamic interface in which a camera pattern shakes up and down or left and right, a red dynamic interface in which a text of "Reject" flows, a red dynamic interface in which an "X"-shaped pattern flows, a red dynamic interface in which a wave fluctuates, a red dynamic interface in which thread rotates, and the like.

The dynamic interface B may correspond to the second processing manner of the video call notification (or voice call notification) task, and the operation directivity of the dynamic interface B may indicate that the user can answer a video call (or voice call) by initiating a touch operation (for example, a swipe operation, a press operation, and a tap operation) in the screen area (for example, the side display area B or the side display area A) in which the dynamic interface B is displayed. In an example, the dynamic interface B may be a green or blue dynamic interface, for example, may be a green or blue dynamic interface in which a camera pattern shakes up and down or left and right, a green or blue dynamic interface in which a text of "Answer" flows, a green or blue dynamic interface in which a "√"-shaped pattern flows, a green or blue dynamic interface in which a wave fluctuates, a green or blue dynamic interface in which thread rotates, and the like.

In this example, representation forms of the dynamic interface A and the dynamic interface B are not specifically limited.

In these embodiments, when the electronic device executes a task, a task-related dynamic interface is displayed in the side area of the screen, and this enriches a display manner of the side area of the screen. In addition, the dynamic interface may indicate a related processing result of the task to the user, to indicate the user to perform a related operation in a display area of the related dynamic interface. In this way, a processing result desired by the user can be achieved, the electronic device is more intelligent, and user operation experience is improved.

The first task is a task that needs to be continuously executed and whose task information needs to be updated in real time. For route navigation task, real-time updated task information is a turning direction of the electronic device, and the turning direction of the electronic device indicates a turning direction of the user. Specifically, before the user drives to a destination, the electronic device needs to continuously perform the task. In performing the route navigation task, the electronic device 100 continuously obtains a current location of the user, and determines, with reference to a route that can reach the destination, a current turning direction of the user, for example, a left turn or a right turn. For another example, for an exercise monitoring task, real-time updated task information is physical fitness information such as an exercise heart rate and exercise information such as a running speed that are collected by the electronic device. For another example, for a physical fitness monitoring task, real-time updated task information is physical fitness information such as a blood pressure. Other examples are not enumerated one by one herein.

When the first task executed by the electronic device 100 is a task that needs to be continuously executed and whose task information needs to be continuously updated, a dynamic interface may be displayed on one or two sides of the curved display, where the dynamic interface is related to the real-time updated task information of the first task. The real-time updated task information of the first task may be referred to as real-time updated information output by the first application corresponding to the first task. That is, output of the first application may be real-time updated information.

The first task of the electronic device 100 is a route navigation task. A main interface displayed in the main display area of the curved display may be a running interface of an electronic map corresponding to the route navigation task. Based on a direction corresponding to the side display area A or the side display area B, a dynamic interface associated with a current turning direction of the user that is recently determined by the electronic device is displayed in the side display area A and/or the side display area B. Specifically, it is determined whether the direction corresponding to the side display area A or the side display area B is consistent with the current turning direction of the user, and then a related dynamic interface is displayed.

If the direction corresponding to the side display area A is consistent with the current turning direction of the user, a dynamic interface indicating permission of communication or permission of advance is displayed in the side display area A. Further, a dynamic interface indicating prohibition of passage or prohibition of advance is further displayed in the side display area B.

If the direction corresponding to the side display area B is consistent with the current turning direction of the user, a dynamic interface indicating permission of communication or permission of advance is displayed in the side display area B. Further, a dynamic interface indicating prohibition of passage or prohibition of advance is further displayed in the side display area A.

In an example, it may be set that a direction that the user faces currently is used as a reference. The side display area A is the left side of the electronic device 100, and the side display area B is the right side of the electronic device 100. It may be further set that the current turning direction of the user that is recently determined by the electronic device is a left turn. The electronic device 100 may display a dynamic interface C in the side display area A, and/or display a dynamic interface D in the side display area B. The dynamic interface C is a dynamic interface indicating permission of communication or permission of advance, and the dynamic interface D is a dynamic interface indicating prohibition of passage or prohibition of advance. In a specific example, a color of the dynamic interface C may be green or blue, and a color of the dynamic interface D may be red. More specifically, the dynamic interface C may be a green or blue dynamic interface in which an automobile pattern emerges or the like, and the dynamic interface D may be a red dynamic interface in which an automobile pattern flashes or the like. It is easy to understand that green corresponds to a green light in a traffic light, indicating permission of advance. Red corresponds to a red light in the traffic light, indicating prohibition of advance. Therefore, a green dynamic interface is displayed on a side that is consistent with a user's advance direction, and a red dynamic interface is displayed on a side that is opposite to the user's advance direction, so that the user can intuitively see the current turning direction.

In this example, representation forms of the dynamic interface A and the dynamic interface B are not specifically limited.

In an example, the first task of the electronic device 100 may be an exercise monitoring task. A main interface of the exercise monitoring task displayed on a front display of the curved display may be physical fitness information such as an exercise heart rate and exercise information such as a running speed that are collected by the electronic device in real time. A dynamic interface related to the physical fitness information such as the exercise heart rate that is collected by the electronic device 100 in real time may be displayed in the side display area A and/or the side display area B based on a normal range of physical fitness information such as a normal range of the exercise heart rate of the user. For example, if the real-time collected exercise heart rate is within the normal range of the exercise heart rate of the user, a displayed dynamic interface is a green or blue dynamic interface, for example, a blue or green dynamic interface in which a wave slowly fluctuates. If the exercise heart rate exceeds the normal range of the exercise heart rate of the user, a displayed dynamic interface is a red dynamic interface, for example, a red dynamic interface in which a wave rapidly fluctuates. This example describes only the dynamic interface when the exercise heart rate is within the normal range of the exercise heart rate of the user and the dynamic interface when the exercise heart rate exceeds the normal range of the exercise heart rate of the user as examples, and does not constitute a limitation.

In an example of this example, when a dynamic interface is displayed, a sound effect matching the dynamic interface may be further played. For example, the dynamic interface in which a wave slowly fluctuates corresponds to a slow-paced sound effect. For another example, the dynamic interface in which a wave rapidly fluctuates corresponds to a fast-paced sound effect.

In an example, the first task of the electronic device 100 may be a physical fitness monitoring task. A main interface of the physical fitness monitoring task displayed on a front display of the front screen may be physical fitness information such as a blood pressure collected by the electronic device in real time. A dynamic interface associated with the physical fitness information such as the blood pressure collected by the electronic device in real time may be displayed in the side display area A and/or the side display area B based on a normal range of the physical fitness information such as a normal range of the blood pressure of the user. For example, if the real-time collected blood pressure is within the normal range of the blood pressure of the user, a displayed dynamic interface is a green or blue dynamic interface, for example, a dynamic interface in which blue or green thread slowly rotates. If the blood pressure exceeds the normal range of the blood pressure of the user, a displayed dynamic interface is a red dynamic interface, for example, a red dynamic interface in which thread rapidly rotates.

This example describes only the dynamic interface in which the blood pressure is within the normal range of the blood pressure of the user and the dynamic interface in which the blood pressure exceeds the normal range of the blood pressure of the user as examples, and does not constitute a limitation.

In this example, while a dynamic interface is displayed, a sound effect matching the dynamic interface may be further played. For example, the dynamic interface in which thread rotates slowly corresponds to a slow-paced sound effect, and the dynamic interface in which thread rapidly rotates corresponds to a fast-paced sound effect.

In these embodiments, when the electronic device executes a task, a dynamic interface associated with real-time updated task information is displayed in the side area of the screen. This not only enriches a display manner of the side area of the screen, but also reminds the user of a matter that needs to be noticed, so that the electronic device is more intelligent, and user experience is improved.

In some embodiments, the first task may be a result prompt task. For example, for a video game, a game result includes: game victory and game failure. For another example, for a payment task, a payment result includes: payment success and payment failure. In these embodiments, a dynamic interface associated with a result that is prompted by the result prompt task may be displayed in the side display area A and/or the side display area B.

In some examples, the first task may be a game result prompt task of a video game. A game end image of the video game may be displayed in the main display area of the curved display. That is, a main interface of the game result prompt task is a game end image. A dynamic interface associated with a game result of the video game may be displayed in the side display area A and/or the side display area B. For example, if the game result is victory, the displayed dynamic interface is a dynamic interface representing celebration, for example, a fireworks dynamic interface. If the game result is failure, the displayed dynamic interface is a dynamic interface representing sadness, for example, a raining dynamic interface. In this example, while a dynamic interface is displayed, a sound effect matching the dynamic interface may be further played. For example, the dynamic interface representing sadness corresponds to a cheerful sound effect, and the dynamic interface representing sadness corresponds to a cheerless sound effect.

This example describes only the dynamic interface corresponding to the game result of victory and the dynamic interface corresponding to the game result of failure as examples, and does not constitute a limitation.

In some examples, the first task may be a payment result prompt task. A payment result display interface is displayed in the main display area of the curved display. That is, a main interface of the payment result prompt task is a payment result display interface. A dynamic interface associated with a payment result may be displayed in the side display area A and/or the side display area B. For example, if the payment is successful, the displayed dynamic interface may be a green or blue dynamic interface indicating that the payment is successful, for example, a dynamic interface in which a blue or green wave fluctuates. If the payment fails, the displayed dynamic interface may be a red dynamic interface indicating that the payment fails, for example, a red dynamic interface in which a wave fluctuates. In this example, while a dynamic interface is displayed, a sound effect matching the dynamic interface may be further played. For example, a sound effect corresponding to the dynamic interface corresponding to the payment success is a voice "payment succeeded", and a sound effect corresponding to the dynamic interface corresponding to the payment failure is a voice "payment failed".

In these embodiments, a dynamic interface associated with a result prompted by a prompt task may be displayed in the side area of the screen. This enriches a display manner of the side area of the screen and reminds the user of a matter that needs to be noticed, so that the electronic device is more intelligent, and user experience is improved.

It is easy to understand that the tasks such as the route navigation task, the exercise monitoring task, the physical fitness monitoring task, and the payment task are triggered by the electronic device in response to an operation initiated by the user.

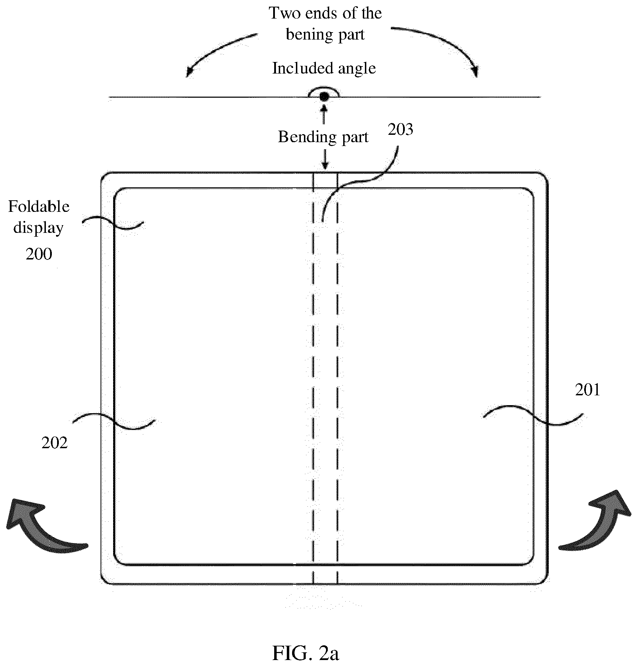

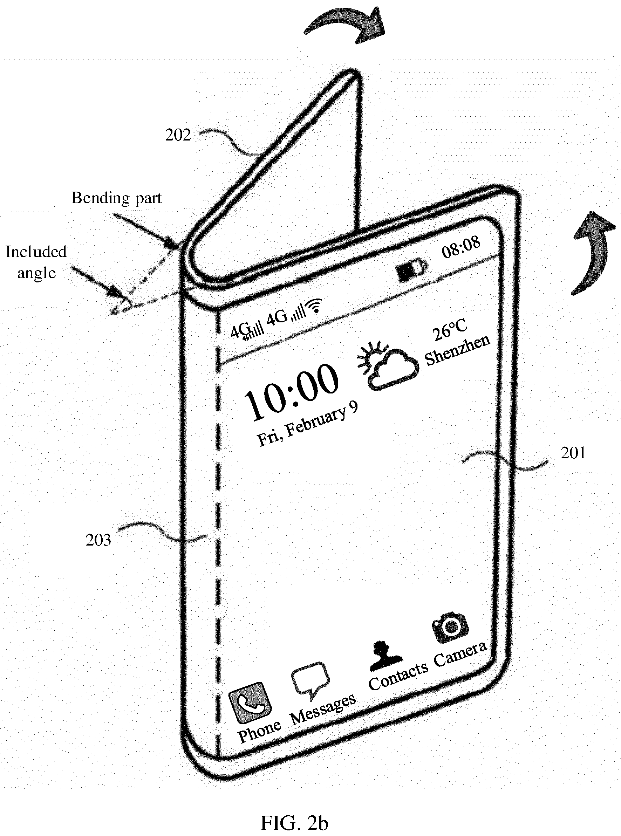

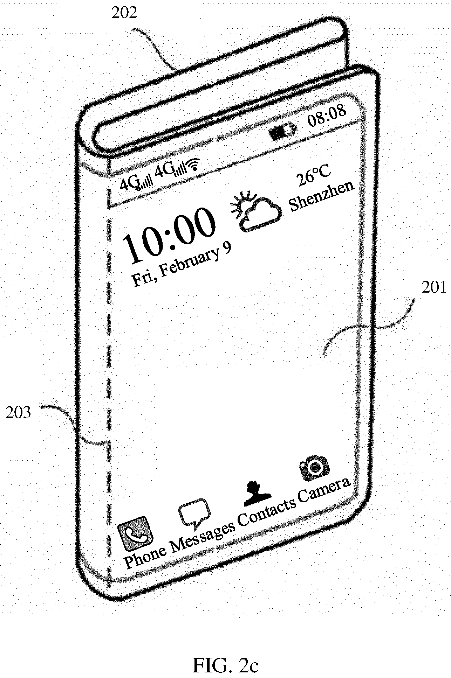

In some embodiments, the electronic device 100 may have a foldable display. Refer to FIG. 2a, FIG. 2b, and FIG. 2c. The electronic device 100 may include a foldable display 200. The foldable display 200 may be divided into an area A 201, an area B 202, and an area C 203.

The foldable display 200 may have at least three physical forms: an unfolded form, a semi-folded form, and a folded form (which may also be referred to as a closed form).

As shown in FIG. 2a, when the electronic device 100 is in the unfolded form, that is, when the folded display 200 is in the unfolded form, an included angle formed by the area A 201 and the area B 202 is a first angle. α1 ≤ first angle ≤ 180°. 90° ≤ α1 < 180°. For example, α1 may be 90°.

As shown in FIG. 2b, when the electronic device 100 is in the semi-folded form, that is, when the folded display 200 is in the semi-folded form, an included angle formed by the area A 201 and the area B 202 is a second angle. α3 ≤ second angle ≤ α2. 90° ≥ α3 ≥0°, 180° ≥ α2 ≥90°. In one example, α3 may be 0°, and α2 may be 90°.

As shown in FIG. 2c, when the electronic device 100 is in the folded form, that is, when the folded display 200 is in the folded form, an included angle formed by the area A 201 and the area B 202 is a third angle. 0° ≤ third angle ≤ α6. 0 ≤ α6 ≤90°. Specifically, α6 may be 0° or 90°.

The electronic device 100 in the unfolded form may be folded in a direction in which the area A 201 and the area B 202 depart from each other. When the electronic device 100 is in the folded form, a direction in which the area A 201 faces is opposite to a direction in which the area B 202 faces. When the electronic device 100 is in the folded form, a plane in which the area A 201 is located is parallel to a plane in which the area B 202 is located. The area C 203 forms a side display area of the electronic device 100, the area A 201 forms a main display area (or back display area) of the electronic device 100, and the area B 202 forms a back display area (or main display area) of the electronic device 100.

When the folded display is in the folded form, the area A 201 or the area B 202 is the main display area of the display, and may display a main interface of a first task of the electronic device 100. For the main interface of the first task, refer to the foregoing descriptions. Details are not described herein again. The area C 203 is a side display area of the display.

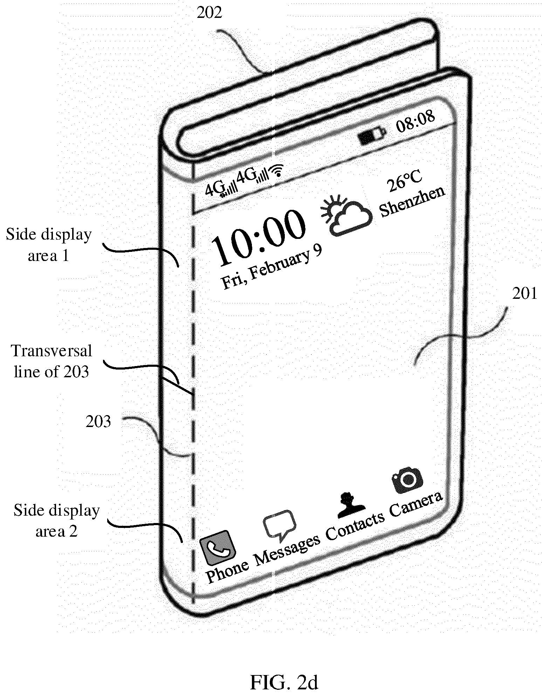

If the first task is one of the foregoing tasks such as the alarm start task, the incoming call notification task, and the video call (or voice call) notification task, the area C 203 may be divided into a side display area 1 and a side display area 2, to respectively display the foregoing different dynamic interfaces. Specifically, refer to FIG. 2d. The area C 203 may be divided into the side display area 1 and the side display area 2 along a lateral direction of the area C.

In some examples, for a dynamic interface displayed in the side display area 1, refer to the foregoing descriptions of the dynamic interface displayed in the side display area A. For a dynamic interface displayed in the side display area 2, refer to the foregoing descriptions of the dynamic interface displayed in the side display area B.

In some examples, for a dynamic interface displayed in the side display area 1, refer to the foregoing descriptions of the dynamic interface displayed in the side display area B. For a dynamic interface displayed in the side display area 2, refer to the foregoing descriptions of the dynamic interface displayed in the side display area A.

If the first task is a route navigation task, a related dynamic interface may be displayed based on whether a side that is of the electronic device 100 and in which the area C 203 is located is consistent with a turning direction of a user. For details, refer to the foregoing related descriptions. Details are not described herein again.

If the first task is one of the foregoing tasks such as the exercise monitoring task and the physical fitness monitoring task, a related dynamic interface may be displayed in the area C 203 based on real-time collected physical fitness information of a user. For details, refer to the foregoing related descriptions. Details are not described herein again.

If the first task is a result prompt task, for example, a game result prompt task and a payment result prompt task, a related dynamic interface may be displayed in the area C 203 based on a game result, a payment result, or the like. For details, refer to the foregoing related descriptions. Details are not described herein again.

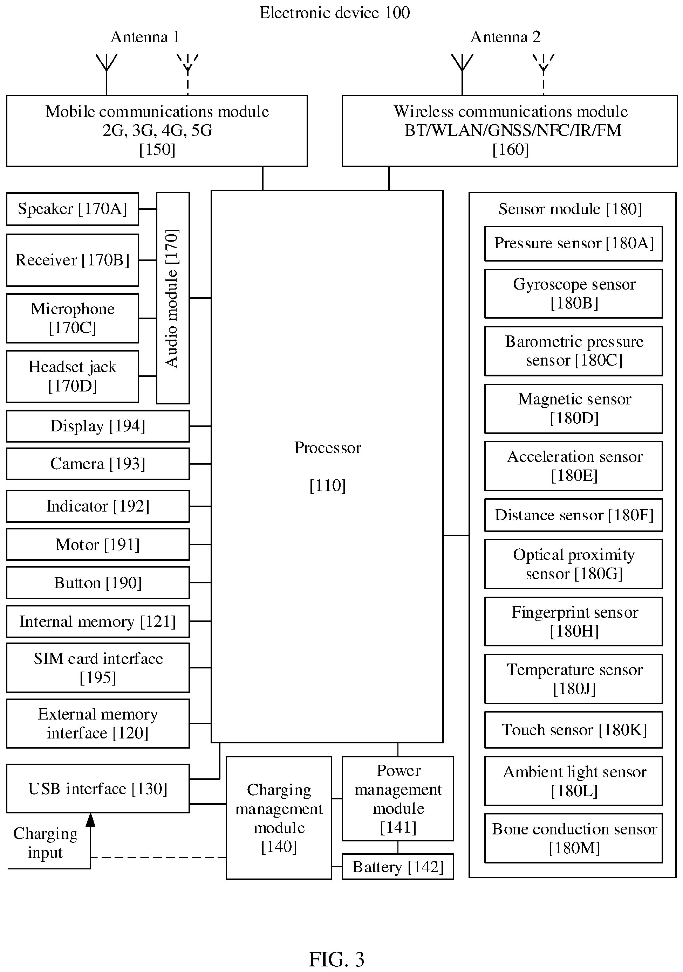

FIG. 3 is a schematic diagram of a hardware structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that a structure shown in this embodiment of the present invention does not constitute a specific limitation on the electronic device 100. In other embodiments of this application, the electronic device 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

The electronic device 100 may implement a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs, which execute a program instruction to generate or change display information.

The display 194 is configured to display an image, a dynamic interface, a video, and the like. The dynamic interface may include the dynamic interface A, the dynamic interface B, the dynamic interface C, the dynamic interface D shown above, a dynamic interface E, a dynamic interface F, a dynamic interface G, and a dynamic interface H. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

When the display panel is made of a material such as an OLED, an AMOLED, and an FLED, the display 194 can be bent. Herein, that the display 194 can be bent means that the display can be bent to any angle at a fixed part or any part and may be maintained at the angle.

In some embodiments, the display 194 may be the curved display shown in FIG. 1a and FIG. 1b.

In some embodiments, the display 194 may be the foldable display shown in FIG. 2a, FIG. 2b, and FIG. 2c.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed at a same touch position but have different touch operation strength may correspond to different operation instructions. For example, when a touch operation whose touch operation strength is less than a first pressure threshold is performed on a Messages icon, an instruction for viewing an SMS message is executed. When a touch operation whose touch operation intensity is greater than or equal to the first pressure threshold is performed on the Messages icon, an instruction for creating an SMS message is executed.

In some embodiments, as shown in FIG. 1a and FIG. 1b, the electronic device 100 may include a curved display. The electronic device 100 may include a plurality of pressure sensors. One or more pressure sensors 180A may be disposed at an internal location of the electronic device 100 corresponding to the side display area A, and are configured to detect a magnitude of an acting force of the user acting on the side display area A, to generate a touch operation. One or more pressure sensors 180A may be disposed at an internal location of the electronic device 100 corresponding to the side display area B, and are configured to detect a magnitude of an acting force of the user acting on the side display area B, to generate a touch operation.

In some embodiments, as shown in FIG. 2a, FIG. 2b, and FIG. 2c, the electronic device 100 may include a foldable display. The electronic device 100 may include a plurality of pressure sensors. One or more pressure sensors 180A may be disposed at an internal location of the electronic device 100 corresponding to the area C 203, and are configured to detect a magnitude of an acting force of the user acting on the area C 203, to generate a touch operation.

The gyroscope sensor 180B may be configured to determine a motion posture of the electronic device 100. In some embodiments, an angular velocity of the electronic device 100 around three axes (namely, axes x, y, and z) may be determined by using the gyro sensor 180B. The gyroscope sensor 180B may be configured to perform image stabilization during photographing. For example, when a shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-controlled gaming scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a flip phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitudes of accelerations of the electronic device 100 in various directions (usually on three axes), and When the electronic device 100 is still, a magnitude and a direction of gravity may be detected. The acceleration sensor 180E may be further configured to identify a posture of the electronic device, and used in an application such as switching between landscape mode and portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector, such as a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light luminance. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 degrades performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142, to prevent abnormal power-off caused by a low temperature.

The touch sensor 180K is also referred to as a "touch panel". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information and blood pressure information based on the blood pressure beating signal obtained by the bone conduction sensor 180M, to implement a heart rate detection function and a blood pressure detection function.

A software system of the electronic device 100 may use a layered architecture, an event-driven architecture, a microkernel architecture, a micro service architecture, or a cloud architecture. In this embodiment of the present invention, an Android system of the hierarchical architecture is used as an example to describe the software structure of the electronic device 100.

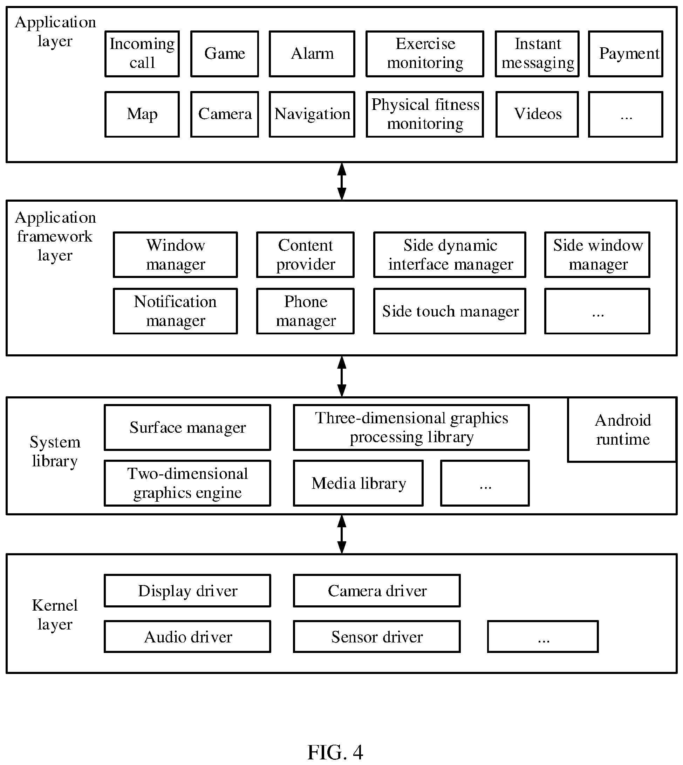

FIG. 4 is a block diagram of a software structure of the electronic device 100 according to an embodiment of the present invention.

In a hierarchical architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 4, the application package may include applications such as incoming call, game, alarm, exercise monitoring, instant messaging, payment, map, camera, navigation, physical fitness monitoring, and video.

The application framework layer provides an application programming interface (application programming interface, API) and a programming framework for an application at the application layer. The application framework layer includes some predefined functions.

As shown in FIG. 4, the application framework layer may include a window manager, a notification manager, a content provider, a phone manager, a side dynamic interface manager, a side touch manager, a side window manager, and the like.

The window manager is configured to manage a window program. The window manager may obtain a size of a display, determine whether there is a status bar, perform screen locking, take a screenshot, and the like.

The notification manager enables an application to display notification information in a status bar, and may be configured to convey a notification message. The notification manager may automatically disappear after a short pause without requiring user interaction. For example, the notification manager is configured to provide notifications of download completing, a message prompt, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an alert sound is played, the electronic device vibrates, or the indicator light blinks.

The content provider is configured to store and obtain data, and enable the data to be accessed by an application. The data may include a video, an image, audio, calls that are dialed and answered, a browsing history, a bookmark, a phone book, and the like.

The phone manager is configured to provide a communications function of the electronic device 100, for example, management of a call status (including answering, hanging up, or the like).

The side dynamic interface manager may be used to store a plurality of dynamic interfaces. One dynamic interface or two dynamic interfaces may be determined from the plurality of stored dynamic interfaces based on a first task of the electronic device.

The side window manager may display one dynamic interface determined by the side dynamic interface manager on one side of a curved display or a foldable display, or display two dynamic interfaces determined by the side dynamic interface manager on two sides of the curved display. The side window manager may receive, through an API, a dynamic interface customized by an application, and display the dynamic interface customized by the application on a side of the curved display or the foldable display. It should be noted that the side of the foldable display herein refers to a side area of the foldable display in a folded form, for example, the area C 203 shown in FIG. 2c.

The side touch manager detects a touch event (including a touch coordinate, namely, a location where the touch event is generated) generated on the side of the curved display or the foldable display, and transfer, through the API, the touch event to an application corresponding to the first task, to trigger a related behavior of the application.

The application may generate a dynamic interface end indication in response to the touch event, and transfer the dynamic interface end indication to the side window manager through the API. In response to the dynamic interface end instruction, the side window manager ends displaying the dynamic interface on the side of the display.

The Android runtime includes a core library and a virtual machine. The Android runtime is responsible for scheduling and management of the Android system.

The core library includes two parts: a function that needs to be invoked in Java language and a core library of Android.

The application layer and the application framework layer run on the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of function modules, for example, a surface manager (surface manager), media libraries (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video coding formats, such as MPEG-4, H.264, MP3, AAC, AMR, JPG, and PNG.

The three-dimensional graphics processing library is used to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various types of sensors, for example, the pressure sensor, the touch sensor, the bone conduction sensor, the gyroscope sensor, the acceleration sensor, and the angle sensor in embodiments of this application.

The following describes working procedures of software and hardware of the electronic device 100 as examples with reference to a scenario in which an alarm is paused.

When alarm start time comes, an alarm application executes an alarm start task. In response to the alarm start task, the side window manager may obtain, through the API, a dynamic interface A and a dynamic interface B that are customized by the alarm application. An operation directivity of the dynamic interface A indicates that the alarm can be disabled through a swipe operation performed in a screen area in which the dynamic interface A is displayed. An operation directivity of the dynamic interface B indicates that the alarm may start later through a swipe operation performed in a screen area in which the dynamic interface B is displayed. It is assumed that the user swipes and touches the screen area in which the dynamic interface A is displayed. The touch sensor may detect the swipe operation, and transfer the swipe operation to the kernel layer. The kernel layer processes the swipe operation into a swipe event (including information such as a swipe coordinate and a timestamp of the swipe operation). The swipe event is stored at the kernel layer. The window touch manager obtains the swipe event from the kernel layer, and transfers the swipe event to the alarm application. In response to the swipe event, the alarm application ends the alarm, and generates a dynamic interface end indication. The alarm application transfers the dynamic interface end indication to the side window manager, so that the side window manager ends displaying the dynamic interface on a side of the screen.

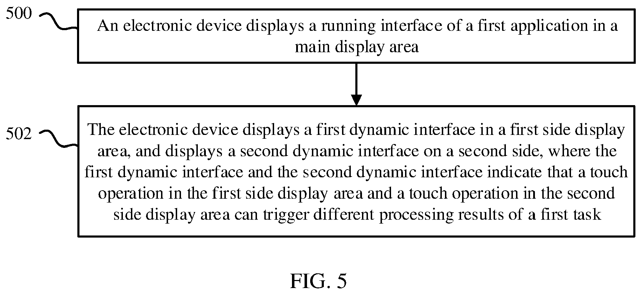

Next, with reference to FIG. 5, a display method for a side area of a screen according to an embodiment of this application is described.

The display method for a side area of a screen provided in this embodiment of this application may be used in an electronic device configured with a main display area, a first side display area, and a second side display area. The first side display area, the second side display area, and the main display area may be located on different planes.

Refer to FIG. 5. The method includes the following steps.

Step 500: The electronic device displays a running interface of a first application in the main display area.

A first task may be a task that is triggered when a preset condition is met, for example, an alarm start task. When alarm start time comes, the alarm start task is triggered. For another example, an incoming call notification task is triggered when an incoming call request is received. There are still other examples.

The first task may be a task of the first application. For example, an alarm start task is a task of an alarm application, an incoming call notification task is a task of an incoming call application, and a video call notification task of instant messaging is a task of an instant messaging application.

If the first application is a foreground running application, before the first task of the first application is triggered, the electronic device may display the running interface of the first application in the main display area. When the first task is triggered, the electronic device may display a main interface of the first task in the main display area. The main interface of the first task belongs to the running interface of the first application.

If the first application is a background running application, before the first task of the first application is triggered, the electronic device may not display the running interface of the first application. When the first task is triggered, the electronic device may display a main interface of the first task in the main display area. The main interface of the first task belongs to the running interface of the first application.

In some embodiments, the first application may be an application built in an operating system (operating system, OS) of the electronic device. When executing a related task of the first application, the electronic device may display a main interface of the task in the main display area. For example, the first task is an alarm start task of an alarm application. A main interface of the alarm application may include a clock image, prompt information, later reminding time, and the like. Both the prompt information and the later reminding time may be set by a user when setting an alarm.

In some embodiments, the first application may alternatively be an application that is not built in an operating system. For example, the application may be an application developed by a developer other than a manufacturer of the electronic device. The user can download the application from an app store and install the application on the electronic device.

In some examples, if the application is an application that is not built in the operating system, the application may include a display format of a main interface defined by the developer of the application. The display format of the main interface customized by the developer of the application may also be referred to as a display format of a customized main interface of the application.

The manufacturer of the electronic device may provide an application developer with a software development kit (software development kit, SDK), so that a developer of an alarm application may develop a main interface of the alarm application through the SDK provided by the manufacturer of the electronic device.

An alarm start task of the alarm application is used as an example. A main interface of the alarm application may include a clock image, prompt information, later reminding time, and the like. The developer of the alarm application may customize a display format of the clock image, a display format of the prompt information, and a display format of the later reminding time through the SDK provided by the manufacturer of the electronic device. When setting an alarm, the user may set specific content of the prompt information and specific time of the later reminding time. When alarm start time comes, the alarm application may transfer the main interface to the operating system through an SDK API, so that the operating system may display the main interface in the main display area.

An incoming call notification task of an incoming call application is used as an example. A main interface of the incoming call notification task may include an incoming call number, a home location of the incoming call number, an avatar of an incoming call user, and the like. A developer of the incoming call application may customize a display format of the incoming call number, a display format of the home location of the incoming call number, a display format of the avatar of the incoming call user, and the like through the SDK provided by the manufacturer of the electronic device. When the electronic device receives an incoming call request from another electronic device in the incoming call application, the incoming call application may generate a main interface based on the incoming call request, and transfer the main interface to the operating system through an SDK API, so that the operating system can display the main interface in the main display area.

Step 502: The electronic device displays a first dynamic interface in the first side display area, and displays a second dynamic interface on the second side, where the first dynamic interface and the second dynamic interface indicate that a touch operation in the first side display area and a touch operation in the second side display area may trigger different processing results of the first task.

Specifically, the first dynamic interface has a first operation directivity, and the second dynamic interface has a second operation directivity. The first operation directivity indicates that a first touch operation initiated by the user in the first side display area may trigger a first processing result of the first application. The second operation directivity indicates that a second touch operation initiated by the user in the second side display area may trigger a second processing result of the first application. The first processing result and the second processing result are different processing results corresponding to the first task.

The electronic device may execute the first processing result of the first task based on the touch received in the first side display area. The electronic device may further execute the second processing result of the first task based on the touch received in the second side display area.

The first task of the electronic device may be a task in which the electronic device performs different processing results in response to different touch operations initiated by the user, for example, an alarm start task, an incoming call notification task, a video call notification task, and a voice call notification task. Different dynamic interfaces displayed on different sides have different operation directivities. The processing result is a result of processing, by the electronic device, the first task in response to a touch operation initiated by the user. For example, for an alarm start task, an operation initiated by the user may be an operation of disabling an alarm, or may be an operation of starting the alarm later. For details, refer to the foregoing descriptions about different processing manners of the user for the first task. Details are not described herein again.

In some embodiments, an alarm start task is used as an example. The first dynamic interface may indicate that an alarm can be disabled through the first touch operation initiated by the user in the first side display area in which the first dynamic interface is displayed. The second dynamic interface may indicate that an alarm may start later through the second touch operation initiated by the user in the second side display area in which the second dynamic interface is displayed. For details of the first dynamic interface and the second dynamic interface, refer to the foregoing descriptions. Details are not described herein again.

In some embodiments, an incoming call notification task is used as an example. The first dynamic interface may indicate that an incoming call can be hung up through the first touch operation initiated by the user in the first side display area in which the first dynamic interface is displayed. The second dynamic interface may indicate that an incoming call can be answered through the second touch operation initiated by the user in the second side display area in which the second dynamic interface is displayed. For details of the first dynamic interface and the second dynamic interface, refer to the foregoing descriptions. Details are not described herein again.

In some embodiments, a video call notification task is used as an example. The first dynamic interface may indicate that a video call can be rejected through the first touch operation initiated by the user in the first side display area in which the first dynamic interface is displayed. The second dynamic interface may indicate that a video call can be answered through the second touch operation initiated by the user in the second side display area in which the second dynamic interface is displayed. For details of the first dynamic interface and the second dynamic interface, refer to the foregoing descriptions. Details are not described herein again.

In some embodiments, for an application that is not built in the operating system, the first dynamic interface and the second dynamic interface may be customized dynamic interfaces for the application. An application developer may define a first dynamic interface and a second dynamic interface of the application, and define touch manners (for example, a swipe operation, a press operation, and a tap operation) corresponding to the first dynamic interface and the second dynamic interface. When the electronic device performs the first task, the application may transfer, through an SDK API, the first dynamic interface, the second dynamic interface, and the touch manners corresponding to the first dynamic interface and the second dynamic interface to the operating system of the electronic device, so that the first dynamic interface and the second dynamic interface may be separately displayed in the first side display area and the second side display area. In an example, the operating system may transfer display locations of the first dynamic interface and the second dynamic interface to the application through the API. For example, locations (for example, coordinates) of the first side display area and the second side display area on an entire screen may be respectively associated with identification information of the first dynamic interface and identification information of the second dynamic interface, and the associated locations and identification information are transferred to the application through the SDK API.

When the operating system of the electronic device detects the first touch operation that is initiated by the user in the first side display area and that complies with the touch manner of the first dynamic interface, the operating system may generate a first touch event. The first touch event may include a touch location, touch time, and the like of the first touch operation. The operating system may transfer the first touch event to the application through the SDK API, so that the application performs corresponding processing based on the first touch event. Specifically, the application may obtain, based on the touch location corresponding to the first touch event and a location of a dynamic interface on the screen, the dynamic interface corresponding to the first touch event, and further trigger a processing result corresponding to the dynamic interface. In an example, after obtaining the first operation event, the application may generate a dynamic interface end indication, and transfer the dynamic interface end indication to the operating system through the SDK API, so that the operating system may end displaying the dynamic interface.

In an example, an alarm application is used as an example. A developer of the alarm application may develop and define, through the SDK provided by the manufacturer of the electronic device, a first dynamic interface corresponding to a processing result of disabling an alarm and a second dynamic interface corresponding to a processing result of starting the alarm later, and define touch manners corresponding to the first dynamic interface and the second dynamic interface. For example, both of the touch manners may be swipe operations.

When alarm start time comes, the electronic device triggers an alarm start task, and the application may transfer the first dynamic interface, the second dynamic interface, and the touch manners corresponding to the first dynamic interface and the second dynamic interface to the operating system. The operating system displays the first dynamic interface in the first side display area, and displays the second dynamic interface in the second side display area. The operating system may separately associate locations (for example, coordinates) of the first side display area and the second side display area on an entire screen with identification information of the first dynamic interface and identification information of the second dynamic interface, and transfer the associated locations and identification information to the alarm application. An operation directivity of the first dynamic interface may be set to that the alarm can be disabled through a touch operation initiated in a screen area (that is, the first side display area) in which the first dynamic interface is displayed. If the user initiates a swipe operation in the first side display area, a trigger sensor of the electronic device detects the swipe operation. The operating system of the electronic device may generate a swipe event based on the swipe operation. The swipe event includes a touch location (that is, a location of the first side display area), touch time, and the like of the swipe operation. The operating system may transfer the swipe event to the alarm application through the SDK API. After obtaining the swipe event, the alarm application may learn, based on the touch location (for example, coordinates) corresponding to the swipe event, that the swipe event is for the first dynamic interface. Further, the alarm application disables the alarm in response to the swipe event. In an example, the alarm application may further generate a dynamic interface end indication in response to the swipe event, and transfer the dynamic interface end indication to the operating system through the SDK API, so that the operating system may end displaying the first dynamic interface and the second dynamic interface.

For development and task execution processes of applications such as an incoming call application and an instant messaging application, refer to the implementation of the alarm application. Details are not described herein again.

In some embodiments, the operating system of the electronic device includes a plurality of preset dynamic interfaces. The method further includes: determining a first dynamic interface from the plurality of dynamic interfaces based on a first processing result of a current application, and determining a second dynamic interface from the plurality of dynamic interfaces based on a second processing result of the current application.

The plurality of dynamic interfaces included in the operating system of the electronic device include a plurality of types of dynamic interfaces, for example, may include a dynamic interface that has a negative attribute, for example, disabling, rejecting, and hanging up, and may include a dynamic interface that has a positive attribute for example, continuing later, answering, and receiving. In an example, the dynamic interface having the negative attribute may be a red-type dynamic interface, and the dynamic interface having the positive attribute may be a green-type dynamic interface. The manufacturer of the electronic device may add an attribute tag to each of the plurality of types of dynamic interfaces in advance, to identify an attribute corresponding to each dynamic interface.

It is easy to understand that the electronic device may obtain different processing results corresponding to a task that is currently executed by the electronic device. For example, a processing result corresponding to an alarm start task is disabling an alarm and starting the alarm later, and a processing result corresponding to an incoming call notification task is hanging up a call or answering a call. Other examples are not enumerated one by one herein.

The electronic device may match a dynamic interface for a processing result from the plurality of dynamic interfaces based on respective attributes of different processing results corresponding to the first task, for example, the negative attribute or the positive attribute.

In some embodiments, refer to FIG. 1a and FIG. 1b. The electronic device is provided with a curved display. A main display area of the curved display is the main display area shown in FIG. 1a and FIG. 1b. In an example, the side display area A shown in FIG. 1a and FIG. 1b may be used as the first side display area, and the side display area B shown in FIG. 1a and FIG. 1b may be used as the second side display area. In an example, the side display area A shown in FIG. 1a and FIG. 1b may be used as the second side display area, and the side display area B shown in FIG. 1a and FIG. 1b may be used as the first side display area.

In some embodiments, refer to FIG. 2d. The electronic device is provided with a foldable display. A main display area is the area A 201 or the area B 202 shown in FIG. 2c. In an example, the side display area 1 shown in FIG. 2d may be used as the first side display area, and the side display area 2 shown in FIG. 2d may be used as the second side display area. In an example, the side display area 1 shown in FIG. 2d may be used as the second side display area, and the side display area 2 shown in FIG. 2d may be used as the first side display area.

According to the display method for a side area of a screen provided in embodiments of this application, when the electronic device performs a task, a task-related dynamic interface may be displayed in the side area of the screen. This enriches a display manner of the side area of the screen. In addition, the dynamic interface may indicate a related processing result of the task to the user, so that the user may be indicated to perform an operation in the area in which the dynamic interface is displayed, to obtain the related processing result. In this way, the electronic device is more intelligent, and user operation experience is improved.

Next, in an embodiment, the method shown in FIG. 5 is described by using an example. In this embodiment, a dynamic interface may be referred to as a dynamic effect.

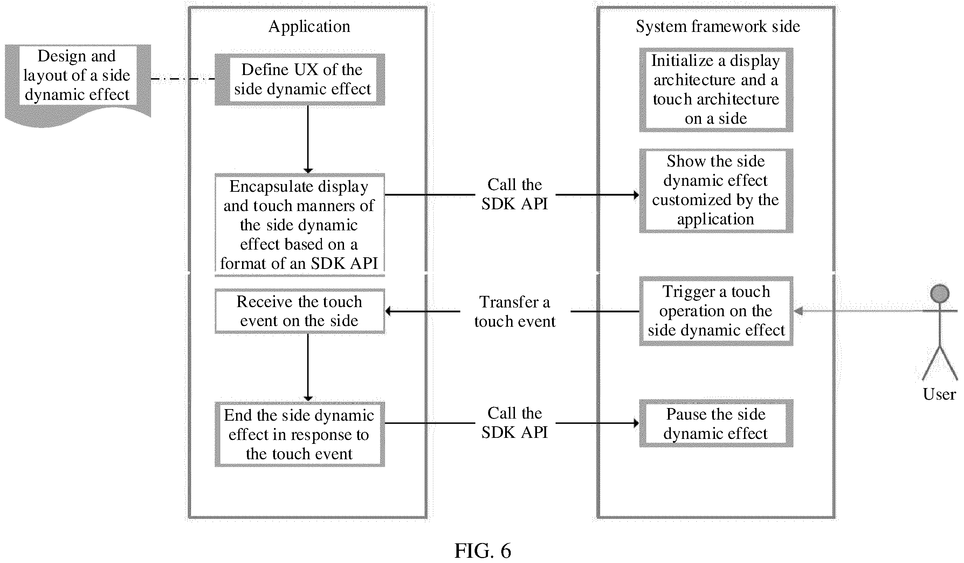

Refer to FIG. 6. A developer of an application may design or define a user experience (user experience, UX) effect of a side dynamic effect and a responsive touch manner (for example, swiping, pressing, and tapping) based on a service of the application. Specifically, a side dynamic effect and a responsive touch manner may be designed and defined through an SDK provided by a manufacturer of an electronic device, and the side dynamic effect and the responsive touch manner are encapsulated through an SDK API provided by the manufacturer of the electronic device.

In this embodiment, the electronic device is configured with a curved display. The side is a side of the electronic device, and may also be referred to as a side display area of the curved display. For details, refer to the foregoing descriptions of FIG. 1a and FIG. 1b.

When starting an application, a system framework side of the electronic device may initialize a display architecture and a touch architecture on the side. In an example, the touch architecture may detect operations such as a swipe operation, a press operation, and a tap operation initiated by a user on the side. The system framework side of the electronic device is an operating system of the electronic device.

When an application performs a task, a side dynamic effect and a responsive touch manner may be transferred to the system framework through the SDK API, so that the system framework displays the side dynamic effect of the application on the side.

The user may trigger touch on the side dynamic effect. That is, the user may perform a touch operation (for example, a swipe operation, a press operation, and a tap operation) in a screen area in which the side dynamic effect is displayed. The system framework side detects the touch operation, and generates a touch event based on the touch operation. The touch event may include a touch location, touch time, and the like. The system framework side transfers the touch event to the application.

The application receives the touch event, generates a corresponding task result in response to the touch event, and ends the dynamic effect. Specifically, a dynamic effect ending indication may be generated. The application can send the dynamic effect ending indication to the system framework through the SDK API. The system frame side pauses or ends the side dynamic effect in response to the dynamic effect ending indication.

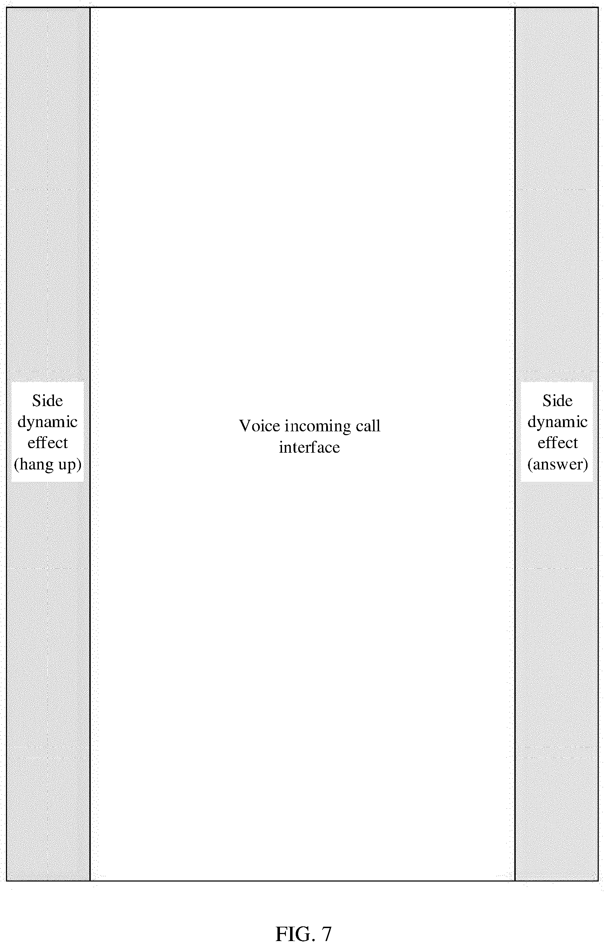

In a specific example, with reference to a scenario shown in FIG. 7, the method in this embodiment is described by using an example.

Currently, the electronic device may execute an incoming call notification task of a voice incoming call application, and may display an interface of a voice incoming call in the main display area of the screen. The interface may specifically include an avatar, a name, and the like of an incoming call user (which are not shown). A side dynamic effect for indicating hanging-up may be displayed in a side display area located on one side of the main display area, and a side dynamic effect for indicating answering may be displayed in a side display area located on the other side of the main display area. The side dynamic effect for indicating hanging-up and the side dynamic effect for indicating answering are both dynamic effects designed or defined by a developer of the voice incoming call application. The side dynamic effect for indicating hanging-up is red, so that it may be indicated to the user that the incoming call may be hung up through an operation performed on the dynamic effect. The side dynamic effect for indicating answering is green, so that it may be indicated to the user that the incoming call may be answered through an operation performed on the dynamic effect.

The user may perform a swipe operation in the screen area in which the side dynamic effect for indicating hanging-up is displayed, so that a hang-up operation is very conveniently performed.

The user may alternatively perform a swipe operation on the screen area in which the side dynamic effect for indicating answering is displayed, so that an answer operation is very conveniently performed.

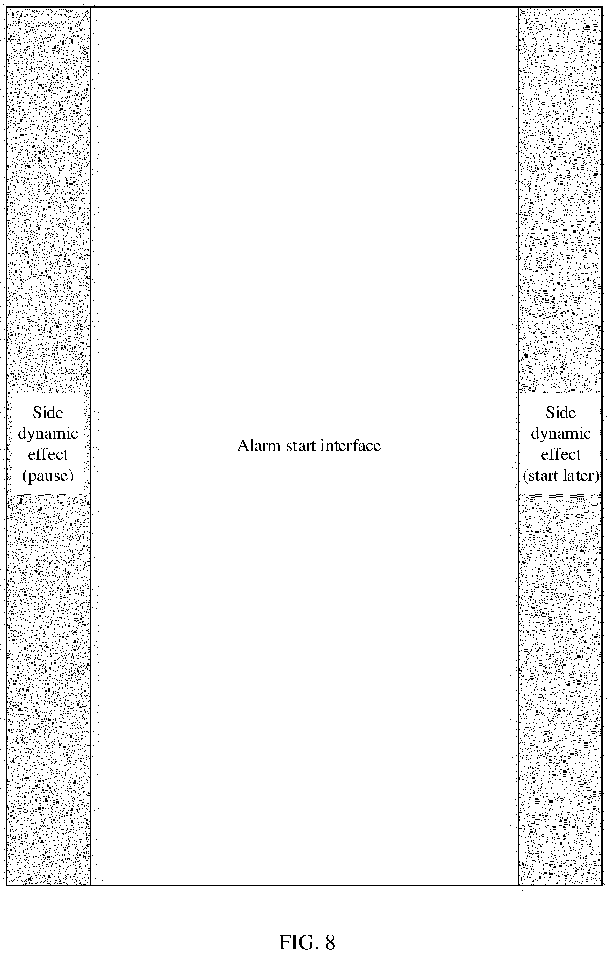

In another specific example, with reference to a scenario shown in FIG. 8, the method in this embodiment is described by using an example.

In a specific example, with reference to a scenario shown in FIG. 7, the solution in this embodiment is described by using an example.

Currently, the electronic device may execute an alarm start task of an alarm application, and may display an alarm start interface in the main display area of the screen. The alarm start interface may specifically include a clock image, prompt information, and the like (which are not shown). A side dynamic effect for indicating pausing may be displayed in a side display area located on one side of the main display area, and a side dynamic effect for indicating starting later may be displayed in a side display area located on the other side of the main display area. The side dynamic effect for indicating pausing and the side dynamic effect for indicating starting later are both dynamic effects designed or defined by a developer of the alarm application. The side dynamic effect for indicating pausing is red, so that it may be indicated to the user that the alarm may be paused through an operation performed on the dynamic effect. The side dynamic effect for indicating starting later is green, so that it may be indicated to the user that the alarm may start later through an operation performed on the dynamic effect.

The user may perform a swipe operation in the screen area in which the side dynamic effect for indicating pausing is displayed, so that an alarm pause operation is very conveniently performed.

The user may alternatively perform a swipe operation on the screen area in which the side dynamic effect for indicating starting later is displayed, so that an operation of starting the alarm later is very conveniently performed.

According to the method provided in embodiments of this application, when the electronic device performs a task, a task-related dynamic effect may be displayed in the side area of the screen. This enriches a display manner of the side area of the screen. In addition, the dynamic effect may indicate a related processing result of the task to the user, so that the user may be indicated to perform an operation in the area in which the dynamic effect is displayed, to obtain the related processing result. In this way, the electronic device is more intelligent, and user operation experience is improved.

Next, in an embodiment, the method shown in FIG. 5 is described by using an example. In this embodiment, a dynamic interface may be referred to as a dynamic effect.

The electronic device is configured with a curved display, or configured with a foldable display. When the electronic device is configured with a curved display, the side is a side or a side area of the electronic device, and may also be referred to as a side display area of the curved display. For details, refer to the foregoing descriptions of FIG. 1a and FIG. 1b. When the electronic device is configured with a foldable display, the side or the side area is a side of the electronic device when the foldable display is in a folded form. For details, refer to the foregoing descriptions of FIG. 2c and FIG. 2d.

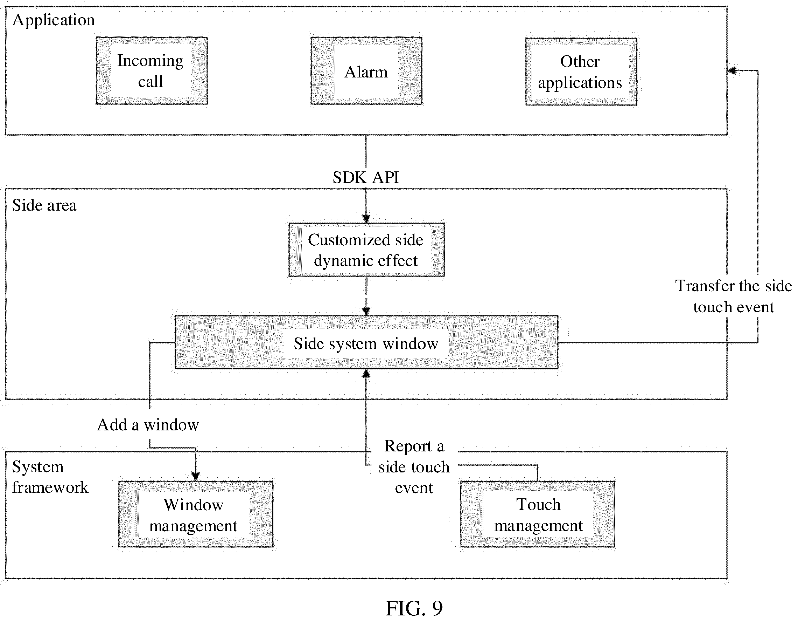

Refer to FIG. 9. The electronic device may be installed with an incoming call application, an alarm application, and another application. A system framework of the electronic device has a window management capability and a touch management capability. A side system window is added to the side area of the electronic device through the window management capability and the touch management capability of the system framework. The side system window can play a customized dynamic effect of an application, receive reporting of a side touch event, and forward the touch event to the application.

The system framework is an operating system framework of the electronic device and may provide an SDK API.

A developer of an application may define a dynamic effect of the application and a format of a touch event corresponding to the dynamic effect. The dynamic effect of the application defined by the developer of the application may be referred to as a customized dynamic effect of the application. The application can call the SDK API to transfer the customized dynamic effect of the application to the system framework.

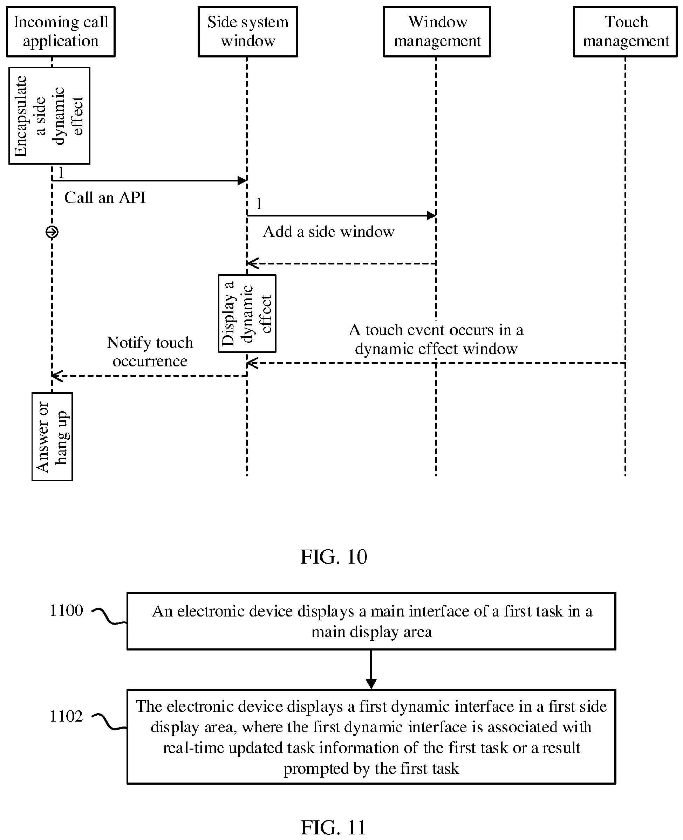

In an example, the method provided in this embodiment is described by using an incoming call application as an example. Refer to FIG. 10 and FIG. 9. The incoming call application may have an encapsulated side dynamic effect (or referred to as a customized side dynamic effect). When the incoming call application performs an incoming call notification task, a side system window (also referred to as a side window) is added to the side area of the electronic device through the window management capability of the system framework. The incoming call application can transfer the side dynamic effect to the side system window by calling the API. The side system window can display the side dynamic effect. A touch event in a dynamic effect window may be detected through the touch management capability of the system framework. The dynamic effect window is a side system window on which a dynamic effect is displayed. The detected touch event is reported to the side system window through the touch management capability of the system framework. The side system window forwards the touch event to the incoming call application. The incoming call application answers an incoming call or hangs up an incoming call in response to the touch event.

According to the method provided in embodiments of this application, when the electronic device performs a task, a task-related dynamic effect may be displayed in the side area of the screen. This enriches a display manner of the side area of the screen. In addition, the dynamic effect may indicate a related processing result of the task to the user, so that the user may be indicated to perform an operation in the area in which the dynamic effect is displayed, to obtain the related processing result. In this way, the electronic device is more intelligent, and user operation experience is improved.

Next, with reference to FIG. 11, a display method for a side area of a screen according to an embodiment of this application is described.

The display method for a side area of a screen provided in this embodiment of this application may be used an electronic device configured with a main display area and a first side display area. The main display area and the first side display area may be located on different planes.

Refer to FIG. 11. The method includes the following steps.

Step 1100: The electronic device displays a main interface of a first task in the main display area.

The first task may be a task triggered by the electronic device in response to an operation initiated by a user, for example, a route navigation task, an exercise monitoring task, a physical fitness monitoring task, a game result prompt task, and a payment result prompt task. There are still other examples.

The first task may be a task of a first application. For example, the route navigation task may be a task of an electronic map application or a navigation application, the exercise monitoring task may be a task of an exercise monitoring application, the payment task may be a task of a payment application, and the like.

If the first application is a foreground running application, before the first task of the first application is triggered, the electronic device may display a running interface of the first application in the main display area. When the first task is triggered, the electronic device may display a main interface of the first task in the main display area. The main interface of the first task belongs to the running interface of the first application.

In some embodiments, the first application may be an application built in an operating system of the electronic device. When executing a related task of the first application, the electronic device may display a main interface of the task in the main display area. For example, the first task is a route navigation task of a map application. A main interface may be a running interface of the map application.

In some examples, if the application is an application that is not built in the operating system, the application may include a display format of a main interface defined by a developer of the application. The display format of the main interface customized by the developer of the application may also be referred to as a display format of a customized main interface of the application. A manufacturer of the electronic device may provide an SDK for the developer of the application, so that a developer of an alarm application can develop a display format of a related interface of the application through the SDK provided by the manufacturer of the electronic device.

In some embodiments, the first task is a task that needs to be continuously executed and whose task information needs to be updated continuously. A route navigation task is used as an example. The route navigation task needs to continuously update a current turning direction of the user. The current turning direction is a direction in which the user shall travel or advance at a next moment at a current location according to a route to a destination. An exercise monitoring task is used as an example. The electronic device may continuously collect physical fitness information such as an exercise heart rate and exercise information such as a running speed by using a component, for example, a gyroscope sensor, an acceleration sensor, and a bone conduction sensor, to obtain new task information. A physical fitness monitoring task is used as an example. The electronic device may continuously collect physical fitness information such as a blood pressure and exercise information such as a running speed by using a component, for example, a bone conduction sensor, to obtain new task information. The electronic device may update the main interface based on the new task information.

In some embodiments, the first task may be a result prompt task. For example, for a game result prompt task, a game result includes: game victory and game failure. For another example, for a payment result prompt task, a payment result includes: payment success and payment failure. A main interface of the game result prompt task may be an end image of a video game. A main interface of the payment result prompt task may include a payment result display interface.

Step 1102: The electronic device displays a first dynamic interface in the first side display area, where the first dynamic interface is associated with real-time updated task information of the first task or a result prompted by the first task.

In some embodiments, the first task is a task whose task information needs to be continuously updated in real time, and the first dynamic interface is related to the real-time updated task information of the first task. The real-time updated task information of the first task may be referred to as real-time updated information output by the first application corresponding to the first task. That is, output of the first application may be real-time updated information.

In some examples, the first task is a route navigation task, and real-time updated information of the route navigation task is a current turning direction of the user, for example, a left turn or a right turn. A dynamic interface related to the current turning direction of the user may be displayed in the first side display area. For details, refer to the foregoing descriptions of the route navigation task. Details are not described herein again.

In an example of this example, the display of the electronic device further includes a second side display area, and the second side display area and the first side display area are located on different sides of the electronic device, which may be specifically shown in FIG. 1a and FIG. 1b. In this method, a second dynamic interface related to the current turning direction of the user may be displayed in the second side display area. For example, it may be set that a current advance direction of the user is used as a reference. The first side display area is on the left side of the electronic device, the current turning direction of the user is left, the first dynamic interface is a dynamic interface consistent with the current advance direction, and the second dynamic interface is a dynamic interface opposite to the current advance direction. For details, refer to the foregoing descriptions of the route navigation task. Details are not described herein again.

It should be noted that, in a specific implementation, a coordinate system of the electronic device may be converted into a geodetic coordinate system, so that the coordinate system of the electronic device and a coordinate system for route navigation can be unified. That is, both the coordinate system of the electronic device and the coordinate system for route navigation are geodetic coordinate systems.

In an example, the first dynamic interface may be a customized dynamic interface of a map application. A developer of the map application may define the first dynamic interface. For details, refer to the foregoing descriptions of the embodiment shown in FIG. 5. Details are not described herein again.

In an example, a plurality of dynamic interfaces included in the operating system of the electronic device include a plurality of types of dynamic interfaces, for example, may include a dynamic interface that has a negative attribute, for example, prohibition of passage or prohibition of advance, and may include a dynamic interface that has a positive attribute, for example, permission of passage or permission of advance. The manufacturer of the electronic device may add an attribute tag to each of the plurality of types of dynamic interfaces in advance, to identify an attribute corresponding to each dynamic interface. The electronic device may determine the first dynamic interface from the dynamic interfaces included in the operating system based on whether a direction displayed in the first side display area is consistent with the current turning direction of the user. If the direction displayed in the first side display area is inconsistent with the current turning direction of the user, the electronic device displays a dynamic interface that has a negative attribute. If the direction displayed in the first side display area is consistent with the current turning direction of the user, the electronic device displays a dynamic interface that has a positive attribute.

In some examples, the first task is an exercise monitoring task of an exercise monitoring application, and real-time updated task information of the exercise monitoring task is real-time collected physical fitness information such as an exercise heart rate and exercise information such as a running speed. The user may pre-input, to the electronic device, a normal range of the physical fitness information such as a normal range of an exercise heart rate of the user. The first dynamic interface related to the physical fitness information such as the exercise heart rate that is collected by the electronic device in real time may be displayed in the first side display area based on the normal range of the physical fitness information such as the normal range of the exercise heart rate of the user. For details, refer to the foregoing descriptions of the exercise monitoring task. Details are not described herein again.

In an example, the first dynamic interface may be a customized dynamic interface of the exercise monitoring application. For details, refer to the foregoing descriptions of the embodiment shown in FIG. 5. Details are not described herein again.

In an example, a plurality of dynamic interfaces included in the operating system of the electronic device include a plurality of types of dynamic interfaces, for example, may include a dynamic interface that has a negative attribute, for example, danger, and may include a dynamic interface that has a positive attribute, for example, safety and health. The manufacturer of the electronic device may add an attribute tag to each of the plurality of types of dynamic interfaces in advance, to identify an attribute corresponding to each dynamic interface. The electronic device may determine the first dynamic interface from the dynamic interfaces included in the operating system based on whether real-time collected physical fitness information such as an exercise heart rate exceeds a normal range of physical fitness information such as a normal range of an exercise heart rate of the user. If the physical fitness information exceeds the normal range, a dynamic interface that has a negative attribute is displayed. If the physical fitness information does not exceed the normal range, a dynamic interface that has a positive attribute is displayed.

In some examples, the first task is a physical fitness monitoring task of a physical fitness monitoring application, and real-time updated task information of the physical fitness monitoring task is physical fitness information such as a real-time collected blood pressure. The user may pre-input, to the electronic device, a normal range of the physical fitness information such as a normal range of a blood pressure of the user. The first dynamic interface related to the physical fitness information such as the blood pressure that is collected by the electronic device in real time may be displayed in the first side display area based on the normal range of the physical fitness information such as the normal range of the blood pressure of the user. For details, refer to the foregoing descriptions of the exercise monitoring task. Details are not described herein again.

In an example, the first dynamic interface may be a customized dynamic interface of the physical fitness monitoring application. For details, refer to the foregoing descriptions of the embodiment shown in FIG. 5. Details are not described herein again.

In an example, a plurality of dynamic interfaces included in the operating system of the electronic device include a plurality of types of dynamic interfaces, for example, may include a dynamic interface that has a negative attribute, for example, danger, or may include a dynamic interface that has a positive attribute, for example, safety and health. The manufacturer of the electronic device may add an attribute tag to each of the plurality of types of dynamic interfaces in advance, to identify an attribute corresponding to each dynamic interface. The electronic device may determine the first dynamic interface from the dynamic interfaces included in the operating system based on whether real-time collected physical fitness information such as a blood pressure exceeds a normal range of physical fitness information such as a normal range of a blood pressure of the user. If the physical fitness information exceeds the normal range, a dynamic interface that has a negative attribute is displayed. If the physical fitness information does not exceed the normal range, a dynamic interface that has a positive attribute is displayed.

In some embodiments, the first task is a result prompt task, and the first dynamic interface is associated with a result prompted by the first task. For details, refer to the foregoing descriptions of the game result prompt task and the payment result prompt task. Details are not described herein again.

In an example of these embodiments, the first dynamic interface may be a customized dynamic interface of an application, for example, a customized dynamic interface of a video game application and a customized dynamic interface of a payment application. For a process of developing the customized dynamic interface of the application and displaying the dynamic interface in the side display area, refer to the foregoing descriptions of the method embodiment shown in FIG. 5. Details are not described herein again.

In an example of these embodiments, a plurality of dynamic interfaces included in the operating system of the electronic device include a plurality of types of dynamic interfaces, for example, may include a dynamic interface that has a negative attribute, for example, failure, and may include a dynamic interface that has a positive attribute, for example, success and victory. The manufacturer of the electronic device may add an attribute tag to each of the plurality of types of dynamic interfaces in advance, to identify an attribute corresponding to each dynamic interface. The electronic device may determine the first dynamic interface from the dynamic interfaces included in the operating system based on a task result of a task. For example, if a game fails, a dynamic interface that has a negative attribute may be determined. Other examples are not enumerated one by one herein.

In some embodiments, refer to FIG. 1a and FIG. 1b. The electronic device is provided with a curved display. A main display area of the curved display is the main display area shown in FIG. 1a and FIG. 1b. In an example, the side display area A shown in FIG. 1a and FIG. 1b may be used as the first side display area, and the side display area B shown in FIG. 1a and FIG. 1b may be used as the second side display area. In an example, the side display area A shown in FIG. 1a and FIG. 1b may be used as the second side display area, and the side display area B shown in FIG. 1a and FIG. 1b may be used as the first side display area.

In some embodiments, refer to FIG. 2d. The electronic device is provided with a foldable display. A main display area is the area A 201 or the area B 202 shown in FIG. 2c. In an example, the side display area 1 shown in FIG. 2d may be used as the first side display area.

According to the method provided in this embodiment, when the electronic device executes a task, a dynamic interface associated with the task may be displayed in a side area of the screen. This enriches a display manner of the side area of the screen, and reminds a user of a matter that needs to be noticed, so that the electronic device is more intelligent, and user operation experience is improved.

An embodiment of this application provides a display method for a side area of a screen, used in an electronic device configured with a first display. The first display includes at least a main display area and at least one side display area. The main display area and the at least one side display area are configured to display output of a first application, and are located on different planes. The method includes: when a first task of the first application is triggered, displaying, in the at least one side display area, at least one dynamic interface associated with the first task.

For the main display area and the at least one side display area, refer to the foregoing descriptions of embodiments shown in FIG. 1a, FIG. 1b, and FIG. 2d. Details are not described herein again.

In some embodiments, the dynamic interface has at least one color, and the at least one color includes green or red. For details, refer to the foregoing descriptions of the embodiment shown in FIG. 1c to FIG. 1e.

In an example of these embodiments, the dynamic interface includes at least a wave fluctuating interface or a thread rotating interface. For details, refer to the foregoing descriptions of the embodiment shown in FIG. 1c to FIG. 1e.

In some embodiments, the method further includes: displaying a main interface of the first task in the main display area when the first task is triggered. For details, refer to the foregoing descriptions of embodiments shown in FIG. 5 and FIG. 11.

In some embodiments, the at least one side display area is configured to receive a touch operation. The method further includes: executing a processing result of the first task based on the touch operation received in the at least one side display area. For details, refer to the foregoing descriptions of embodiments shown in FIG. 5, FIG. 6, FIG. 7, FIG. 8, and FIG. 9.

In some embodiments, the at least one side display area includes a first side display area and a second side display area. The method further includes: separately displaying a first dynamic interface and a second dynamic interface in the first side display area and the second side display area; and executing a first processing result of the first task based on a touch operation received in the first side display area, or executing a second processing result of the first task based on a touch operation received in the second side display area.

For details, refer to the foregoing descriptions of embodiments shown in FIG. 5, FIG. 6, FIG. 7, FIG. 8, and FIG. 9.

In an example of these embodiments, the first display is a curved display, the first side display area and the second side display area are curved areas on two sides of the curved display, and the main display area is a front area between the two sides of the curved display. For details, refer to the foregoing descriptions of embodiments shown in FIG. 1a, FIG. 1b, and FIG. 2d.

In an example of these embodiments, the first task is any one of the following:
an incoming call notification task, a video call notification task, a voice call notification task, and an alarm start task.

For details, refer to the foregoing descriptions of embodiments shown in FIG. 5, FIG. 6, FIG. 7, FIG. 8, and FIG. 9.

In some embodiments, the first display is a foldable display, the at least one side display area is located in a bending area of the foldable display in a folded form, and the main display area is located in a non-bending area of the foldable display in the folded form. For details, refer to the foregoing descriptions of FIG. 2d.

In some embodiments, when the output of the first application is real-time updated information, the method further includes: updating the at least one dynamic interface based on the real-time updated information. For details, refer to the foregoing descriptions of the embodiment shown in FIG. 11.

In some embodiments, when the first task is a result prompt task, the at least one dynamic interface is associated with a result prompted by the result prompt task. For details, refer to the foregoing descriptions of the embodiment shown in FIG. 11.

According to the method provided in this embodiment, when the electronic device executes a task, a dynamic interface associated with the task may be displayed in a side area of the screen. This enriches a display manner of the side area of the screen, and reminds a user of a matter that needs to be noticed, so that the electronic device is more intelligent, and user operation experience is improved.

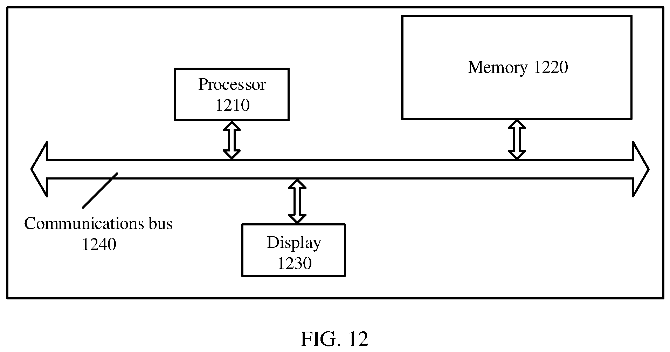

An embodiment of this application provides an electronic device. Refer to FIG. 12. The electronic device includes a processor 1210, a memory 1220, and a display 1230. The display 1230 includes at least a main display area and at least one side display area, and the main display area and the at least one side display area are located on different planes. The memory 1220 is configured to store computer-executable instructions. When the electronic device runs, the processor 1210 executes the computer-executable instructions stored in the memory 1220, so that the electronic device is enabled to perform the method in the foregoing method embodiments. The main display area and the at least one side display area are configured to display output of a first application. The processor 1210 is configured to: when a first task of the first application is triggered, display, in the at least one side display area, at least one dynamic interface associated with the first task.

In some embodiments, the electronic device further includes a communications bus 1240. The processor 1210 may be connected to the memory 1220 and the display 1230 through the communications bus 1240, to perform corresponding control on the display 1230 based on the computer-executable instructions stored in the memory 1220.

For specific implementations of parts/components on the electronic device in this embodiment of this application, refer to the foregoing method embodiments. Details are not described herein again.

Therefore, a dynamic interface associated with a task can be displayed in the side area of the screen. This enriches a display manner of the side area of the screen and reminds a user of a matter that needs to be noticed, so that the electronic device is more intelligent, and user experience is improved.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any conventional processor.

The method steps in embodiments of this application may be implemented in a hardware manner or may be implemented in a manner of executing a software instruction by a processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. A storage medium used as an example is coupled to the processor, so that the processor can read information from the storage medium, and can write information into the storage medium. Certainly, the storage medium may be a part of the processor. The processor and the storage medium may be located in an ASIC.

All or some of the foregoing embodiments may be implemented by using software, hardware, firmware, or any combination thereof. When being implemented by using the software, all or some of embodiments may be implemented in a form of a computer program product. The computer program product includes one or more computer instructions. When the computer program instructions are loaded and executed on a computer, all or some of the procedures or the functions according to embodiments of this application are generated. The computer may be a general purpose computer, a dedicated computer, a computer network, or another programmable apparatus. The computer instructions may be stored in a computer-readable storage medium or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

It may be understood that numerical symbols involved in embodiments of this application are differentiated merely for ease of description, but are not used to limit the scope of embodiments of this application.

## Claims

1. An electronic device (100), comprising:
a first display (194, 200), wherein the first display (194, 200) comprises at least a main display area (201, 202) and at least one side display area (203), and the main display area (201, 202) and the at least one side display area (203) are located on different planes, and are configured to display output of a first application; and
a processor (110), configured to: when a first task of the first application is triggered, display, in the at least one side display area (203), at least one dynamic interface associated with the first task, wherein the dynamic interface is a dynamic image or a dynamic presentation of a text;
wherein the at least one side display area (203) comprises a first side display area and a second side display area;
the processor (110) is further configured to separately display a first dynamic interface and a second dynamic interface in the first side display area and the second side display area; and
the processor (110) is further configured to execute a first processing result of the first task based on a touch operation received in the first side display area, or execute a second processing result of the first task based on a touch operation received in the second side display area;
wherein the first display is a curved display, the first side display area and the second side display area are curved areas on two sides of the curved display, and the main display area is a front area between the two sides of the curved display;
**characterized in that**
when the output of the first application is real-time updated information, the processor (110) is further configured to update the at least one dynamic interface based on the real-time updated information;
the first task is a route navigation task, the real-time updated task information is a turning direction of the electronic device (100), and the turning direction of the electronic device (100) indicates a turning direction of a user;
the electronic device (100) is configured to determine whether a direction corresponding to the first side display area or the second side display area is consistent with the turning direction of the user;
the electronic device (100) is configured to display a dynamic interface indicating permission of communication or permission of advance in the first side display area and a dynamic interface indicating prohibition of passage or prohibition of advance in the second side display area, if the direction corresponding to the first side display area is consistent with the turning direction of the user; and
the electronic device (100) is configured to display the dynamic interface indicating permission of communication or permission of advance in the second side display area and the dynamic interface indicating prohibition of passage or prohibition of advance in the first side display area, if the direction corresponding to the second side display area is consistent with the turning direction of the user.

2. The electronic device (100) according to claim 1, wherein the dynamic interface has at least one color, and the at least one color comprises green or red.

3. The electronic device (100) according to claim 1, wherein the dynamic image is a wave fluctuating interface or a thread rotating interface.

4. The electronic device (100) according to claim 1, wherein the processor (110) is further configured to display a main interface of the first task in the main display area (201, 202) when the first task is triggered.

5. The electronic device (100) according to claim 1, wherein the at least one side display area (203) is configured to receive a touch operation, and the processor (110) is configured to execute a processing result of the first task based on the touch operation received in the at least one side display area (203).

6. The electronic device (100) according to claim 1, wherein the first task is any one of the following:
an incoming call notification task, a video call notification task, a voice call notification task, and an alarm start task.

7. A display method for a side area of a screen, used in an electronic device configured with a first display, wherein the first display comprises at least a main display area and at least one side display area, and the main display area and the at least one side display area are located on different planes, and are configured to display output of a first application; and the method comprises:
when a first task of the first application is triggered, displaying (1102), in the at least one side display area, at least one dynamic interface associated with the first task, wherein the dynamic interface is a dynamic image or a dynamic presentation of a text;
wherein the at least one side display area comprises a first side display area and a second side display area; and
the method further comprises: separately displaying a first dynamic interface and a second dynamic interface in the first side display area and the second side display area; and
executing a first processing result of the first task based on a touch operation received in the first side display area, or executing a second processing result of the first task based on a touch operation received in the second side display area;
wherein the first display is a curved display, the first side display area and the second side display area are curved areas on two sides of the curved display, and the main display area is a front area between the two sides of the curved display;
**characterized in that**
when the output of the first application is real-time updated information, the method further comprises: updating the at least one dynamic interface based on the real-time updated information; and
the first task is a route navigation task, the real-time updated task information is a turning direction of the electronic device, and the turning direction of the electronic device indicates a turning direction of a user;
the electronic device determines whether a direction corresponding to the first side display area or the second side display area is consistent with the turning direction of the user;
the electronic device displays a dynamic interface indicating permission of communication or permission of advance in the first side display area and a dynamic interface indicating prohibition of passage or prohibition of advance in the second side display area, if the direction corresponding to the first side display area is consistent with the turning direction of the user; and
the electronic device displays the dynamic interface indicating permission of communication or permission of advance in the second side display area and the dynamic interface indicating prohibition of passage or prohibition of advance in the first side display area, if the direction corresponding to the second side display area is consistent with the turning direction of the user.

8. The method according to claim 7, wherein the dynamic interface has at least one color, and the at least one color comprises green or red.

9. The method according to claim 7, wherein the dynamic image is a wave fluctuating interface or a thread rotating interface.

10. A computer storage medium, wherein the computer storage medium comprises computer instructions, and when the computer instructions are run on an electronic device, the electronic device is enabled to perform the method according to any one of claims 7 to 9.

## Patentansprüche

1. Elektronische Vorrichtung (100), umfassend:
eine erste Anzeige (194, 200), wobei die erste Anzeige (194, 200) mindestens einen Hauptanzeigebereich (201, 202) und mindestens einen Seitenanzeigebereich (203) umfasst und der Hauptanzeigebereich (201, 202) und der mindestens eine Seitenanzeigebereich (203) sich auf verschiedenen Ebenen befinden und dazu ausgelegt sind, eine Ausgabe einer ersten Anwendung anzuzeigen; und
einen Prozessor (110), der zu Folgendem ausgelegt ist: wenn eine erste Aufgabe der ersten Anwendung ausgelöst wird, Anzeigen mindestens einer dynamischen Schnittstelle, die mit der ersten Aufgabe assoziiert ist, in dem mindestens einen Seitenanzeigebereich (203), wobei die dynamische Schnittstelle ein dynamisches Bild oder eine dynamische Darstellung eines Texts ist;
wobei der mindestens eine Seitenanzeigebereich (203) einen ersten Seitenanzeigebereich und einen zweiten Seitenanzeigebereich umfasst;
der Prozessor (110) ferner dazu ausgelegt ist, eine erste dynamische Schnittstelle und eine zweite dynamische Schnittstelle getrennt in dem ersten Seitenanzeigebereich und dem zweiten Seitenanzeigebereich anzuzeigen; und
der Prozessor (110) ferner dazu ausgelegt ist, ein erstes Verarbeitungsergebnis der ersten Aufgabe basierend auf einem Berührungsvorgang auszuführen, der in dem ersten Seitenanzeigebereich empfangen wird, oder ein zweites Verarbeitungsergebnis der ersten Aufgabe basierend auf einem Berührungsvorgang auszuführen, der in dem zweiten Seitenanzeigebereich empfangen wird;
wobei die erste Anzeige eine gekrümmte Anzeige ist, der erste Seitenanzeigebereich und der zweite Seitenanzeigebereich gekrümmte Bereiche auf zwei Seiten der gekrümmten Anzeige sind und der Hauptanzeigebereich ein vorderer Bereich zwischen den beiden Seiten der gekrümmten Anzeige ist;
**dadurch gekennzeichnet, dass**,
wenn es sich bei der Ausgabe der ersten Anwendung um in Echtzeit aktualisierte Informationen handelt, der Prozessor (110) ferner dazu ausgelegt ist, die mindestens eine dynamische Schnittstelle basierend auf den in Echtzeit aktualisierten Informationen zu aktualisieren;
die erste Aufgabe eine Routennavigationsaufgabe ist, wobei es sich bei den in Echtzeit aktualisierten Informationen um eine Drehrichtung der elektronischen Vorrichtung (100) handelt und die Drehrichtung der elektronischen Vorrichtung (100) eine Drehrichtung eines Benutzers anzeigt;
die elektronischen Vorrichtung (100) dazu ausgelegt ist, zu bestimmen, ob eine Richtung, die dem ersten Seitenanzeigebereich oder dem zweiten Seitenanzeigebereich entspricht, mit der Drehrichtung des Benutzers übereinstimmt;
die elektronische Vorrichtung (100) dazu ausgelegt ist, eine dynamische Schnittstelle, die eine Kommunikationserlaubnis oder Vorrückerlaubnis in dem ersten Seitenanzeigebereich angibt, und eine dynamische Schnittstelle anzuzeigen, die ein Durchgangsverbot oder Vorrückverbot in dem zweiten Seitenanzeigebereich angibt, wenn die Richtung, die dem ersten Seitenanzeigebereich entspricht, mit der Drehrichtung des Benutzers übereinstimmt; und
die elektronische Vorrichtung (100) dazu ausgelegt ist, die dynamische Schnittstelle, die eine Kommunikationserlaubnis oder Vorrückerlaubnis in dem zweiten Seitenanzeigebereich angibt, und die dynamische Schnittstelle anzuzeigen, die ein Durchgangsverbot oder Vorrückverbot in dem ersten Seitenanzeigebereich angibt, wenn die Richtung, die dem zweiten Seitenanzeigebereich entspricht, mit der Drehrichtung des Benutzers übereinstimmt.

2. Elektronische Vorrichtung (100) nach Anspruch 1, wobei die dynamische Schnittstelle mindestens eine Farbe aufweist und die mindestens eine Farbe Grün oder Rot umfasst.

3. Elektronische Vorrichtung (100) nach Anspruch 1, wobei das dynamische Bild eine Wellenfluktuationsschnittstelle oder eine Gewindedrehungsschnittstelle ist.

4. Elektronische Vorrichtung (100) nach Anspruch 1, wobei der Prozessor (110) ferner dazu ausgelegt ist, eine Hauptschnittstelle der ersten Aufgabe im Hauptanzeigebereich (201, 202) anzuzeigen, wenn die erste Aufgabe ausgelöst wird.

5. Elektronische Vorrichtung (100) nach Anspruch 1, wobei der mindestens eine Seitenanzeigebereich (203) dazu ausgelegt ist, einen Berührungsvorgang zu empfangen, und der Prozessor (110) dazu ausgelegt ist, ein Verarbeitungsergebnis der ersten Aufgabe basierend auf dem in dem mindestens einen Seitenanzeigebereich (203) empfangenen Berührungsvorgang auszuführen.

6. Elektronische Vorrichtung (100) nach Anspruch 1, wobei die erste Aufgabe eine von folgenden ist:
eine Benachrichtigungsaufgabe für eingehende Anrufe, eine Benachrichtigungsaufgabe für Videoanrufe, eine Benachrichtigungsaufgabe für Sprachanrufe und eine Alarmstartaufgabe.

7. Anzeigeverfahren für einen Seitenbereich eines Bildschirms, der in einer elektronischen Vorrichtung verwendet wird, die mit einer ersten Anzeige konfiguriert ist, wobei die erste Anzeige mindestens einen Hauptanzeigebereich und mindestens einen Seitenanzeigebereich umfasst und der Hauptanzeigebereich und der mindestens eine Seitenanzeigebereich sich auf verschiedenen Ebenen befinden und dazu ausgelegt sind, eine Ausgabe einer ersten Anwendung anzuzeigen, und wobei das Verfahren Folgendes umfasst:
wenn eine erste Aufgabe der ersten Anwendung ausgelöst wird, Anzeigen (1102) mindestens einer dynamischen Schnittstelle, die mit der ersten Aufgabe assoziiert ist, in dem mindestens einen Seitenanzeigebereich, wobei die dynamische Schnittstelle ein dynamisches Bild oder eine dynamische Darstellung eines Texts ist;
wobei der mindestens eine Seitenanzeigebereich einen ersten Seitenanzeigebereich und einen zweiten Seitenanzeigebereich umfasst; und
das Verfahren ferner Folgendes umfasst: getrenntes Anzeigen einer ersten dynamischen Schnittstelle und einer zweiten dynamischen Schnittstelle in dem ersten Seitenanzeigebereich und dem zweiten Seitenanzeigebereich; und
Ausführen eines ersten Verarbeitungsergebnisses der ersten Aufgabe basierend auf einem Berührungsvorgang, der in dem ersten Seitenanzeigebereich empfangen wird, oder eines zweiten Verarbeitungsergebnisses der ersten Aufgabe basierend auf einem Berührungsvorgang, der in dem zweiten Seitenanzeigebereich empfangen wird;
wobei die erste Anzeige eine gekrümmte Anzeige ist, der erste Seitenanzeigebereich und der zweiten Seitenanzeigebereich gekrümmte Bereiche auf zwei Seiten der gekrümmten Anzeige sind und der Hauptanzeigebereich ein vorderer Bereich zwischen den zwei Seiten der gekrümmten Anzeige ist;
**dadurch gekennzeichnet, dass**,
wenn es sich bei der Ausgabe der ersten Anwendung um in Echtzeit aktualisierte Informationen handelt, das Verfahren ferner Folgendes umfasst: Aktualisieren der mindestens einen dynamischen Schnittstelle basierend auf den in Echtzeit aktualisierten Informationen; und
die erste Aufgabe eine Routennavigationsaufgabe ist, wobei es sich bei den in Echtzeit aktualisierten Informationen um eine Drehrichtung der elektronischen Vorrichtung handelt und die Drehrichtung der elektronischen Vorrichtung eine Drehrichtung eines Benutzers angibt;
die elektronische Vorrichtung bestimmt, ob eine Richtung, die dem ersten Seitenanzeigebereich oder dem zweiten Seitenanzeigebereich entspricht, mit der Drehrichtung des Benutzers übereinstimmt;
die elektronische Vorrichtung eine dynamische Schnittstelle, die eine Kommunikationserlaubnis oder Vorrückerlaubnis in dem ersten Seitenanzeigebereich angibt, und eine dynamische Schnittstelle anzeigt, die ein Durchgangsverbot oder Vorrückverbot in dem zweiten Seitenanzeigebereich angibt, wenn die Richtung, die dem ersten Seitenanzeigebereich entspricht, mit der Drehrichtung des Benutzers übereinstimmt; und
die elektronische Vorrichtung die dynamische Schnittstelle, die eine Kommunikationserlaubnis oder Vorrückerlaubnis in dem zweiten Seitenanzeigebereich angibt, und eine dynamische Schnittstelle anzeigt, die ein Durchgangsverbot oder Vorrückverbot in dem ersten Seitenanzeigebereich angibt, wenn die Richtung, die dem zweiten Seitenanzeigebereich entspricht, mit der Drehrichtung des Benutzers übereinstimmt.

8. Verfahren nach Anspruch 7, wobei die dynamische Schnittstelle mindestens eine Farbe aufweist und die mindestens eine Farbe Grün oder Rot umfasst.

9. Verfahren nach Anspruch 7, wobei das dynamische Bild eine Wellenfluktuationsschnittstelle oder eine Gewindedrehungsschnittstelle ist.

10. Computerspeichermedium, wobei das Computerspeichermedium Computeranweisungen umfasst und eine elektronische Vorrichtung bei Ausführung der Computeranweisungen auf der elektronischen Vorrichtung zum Durchführen des Verfahrens nach einem der Ansprüche 7 bis 9 in der Lage ist.

## Revendications

1. Dispositif électronique (100), comprenant :
un premier organe d'affichage (194, 200), dans lequel le premier organe d'affichage (194, 200) comprend au moins une zone d'affichage principale (201, 202) et au moins une zone d'affichage latérale (203), et la zone d'affichage principale (201, 202) et l'au moins une zone d'affichage latérale (203) sont situées sur des plans différents, et sont configurées pour afficher une sortie d'une première application ; et
un processeur (110), configuré pour : lorsqu'une première tâche de la première application est déclenchée, afficher, dans l'au moins une zone d'affichage latérale (203), au moins une interface dynamique associée à la première tâche, dans lequel l'interface dynamique est une image dynamique ou une représentation dynamique d'un texte ;
dans lequel l'au moins une zone d'affichage latérale (203) comprend une première zone d'affichage latérale et une seconde zone d'affichage latérale ;
le processeur (110) est en outre configuré pour afficher séparément une première interface dynamique et une seconde interface dynamique dans la première zone d'affichage latérale et la seconde zone d'affichage latérale ; et
le processeur (110) est en outre configuré pour exécuter un premier résultat de traitement de la première tâche sur la base d'une opération tactile reçue dans la première zone d'affichage latérale, ou exécuter un second résultat de traitement de la première tâche sur la base d'une opération tactile reçue dans la seconde zone d'affichage latérale ;
dans lequel le premier organe d'affichage est un organe d'affichage incurvé, la première zone d'affichage latérale et la seconde zone d'affichage latérale sont des zones incurvées sur deux côtés de l'organe d'affichage incurvé, et la zone d'affichage principale est une zone avant entre les deux côtés de l'organe d'affichage incurvé ;
**caractérisé en ce que**
lorsque la sortie de la première application est composée d'informations mises à jour en temps réel, le processeur (110) est en outre configuré pour mettre à jour l'au moins une interface dynamique sur la base des informations mises à jour en temps réel ;
la première tâche est une tâche de navigation d'itinéraire, les informations de tâche mises à jour en temps réel sont composées d'un sens de virage du dispositif électronique (100), et le sens de virage du dispositif électronique (100) indique un sens de virage d'un utilisateur ;
le dispositif électronique (100) est configuré pour déterminer le fait qu'un sens correspondant à la première zone d'affichage latérale ou à la seconde zone d'affichage latérale est conforme au sens de virage de l'utilisateur ou non ;
le dispositif électronique (100) est configuré pour afficher une interface dynamique indiquant une permission de communication ou une permission d'avance dans la première zone d'affichage latérale et une interface dynamique indiquant une interdiction de passage ou une interdiction d'avance dans la seconde zone d'affichage latérale, si le sens correspondant à la première zone d'affichage latérale est conforme au sens de virage de l'utilisateur ; et
le dispositif électronique (100) est configuré pour afficher l'interface dynamique indiquant une permission de communication ou une permission d'avance dans la seconde zone d'affichage latérale et l'interface dynamique indiquant une interdiction de passage ou une interdiction d'avance dans la première zone d'affichage latérale, si le sens correspondant à la seconde zone d'affichage latérale est conforme au sens de virage de l'utilisateur.

2. Dispositif électronique (100) selon la revendication 1, dans lequel l'interface dynamique a au moins une couleur, et l'au moins une couleur comprend le vert ou le rouge.

3. Dispositif électronique (100) selon la revendication 1, dans lequel l'image dynamique est une interface fluctuante à onde ou une interface rotative à fil.

4. Dispositif électronique (100) selon la revendication 1, dans lequel le processeur (110) est en outre configuré pour afficher une interface principale de la première tâche dans la zone d'affichage principale (201, 202) lorsque la première tâche est déclenchée.

5. Dispositif électronique (100) selon la revendication 1, dans lequel l'au moins une zone d'affichage latérale (203) est configurée pour recevoir une opération tactile, et le processeur (110) est configuré pour exécuter un résultat de traitement de la première tâche sur la base de l'opération tactile reçue dans l'au moins une zone d'affichage latérale (203).

6. Dispositif électronique (100) selon la revendication l, dans lequel la première tâche est une quelconque tâche parmi les suivantes :
une tâche de notification d'appel entrant, une tâche de notification d'appel vidéo, une tâche de notification d'appel vocal, et une tâche de démarrage d'alarme.

7. Procédé d'affichage pour une zone latérale d'un écran, utilisé dans un dispositif électronique configuré avec un premier organe d'affichage, dans lequel le premier organe d'affichage comprend au moins une zone d'affichage principale et au moins une zone d'affichage latérale, et la zone d'affichage principale et l'au moins une zone d'affichage latérale sont situées sur des plans différents, et sont configurées pour afficher une sortie d'une première application ; et le procédé comprend :
lorsqu'une première tâche de la première application est déclenchée, l'affichage (1102), dans l'au moins une zone d'affichage latérale, d'au moins une interface dynamique associée à la première tâche, dans lequel l'interface dynamique est une image dynamique ou une représentation dynamique d'un texte ;
dans lequel l'au moins une zone d'affichage latérale comprend une première zone d'affichage latérale et une seconde zone d'affichage latérale ; et
le procédé comprend en outre : l'affichage séparé d'une première interface dynamique et d'une seconde interface dynamique dans la première zone d'affichage latérale et la seconde zone d'affichage latérale ; et
l'exécution d'un premier résultat de traitement de la première tâche sur la base d'une opération tactile reçue dans la première zone d'affichage latérale, ou l'exécution d'un second résultat de traitement de la première tâche sur la base d'une opération tactile reçue dans la seconde zone d'affichage latérale ;
dans lequel le premier organe d'affichage est un organe d'affichage incurvé, la première zone d'affichage latérale et la seconde zone d'affichage latérale sont des zones incurvées sur deux côtés de l'organe d'affichage incurvé, et la zone d'affichage principale est une zone avant entre les deux côtés de l'organe d'affichage incurvé ;
**caractérisé en ce que**
lorsque la sortie de la première application est composée d'informations mises à jour en temps réel, le procédé comprend en outre : la mise à jour de l'au moins une interface dynamique sur la base des informations mises à jour en temps réel ; et
la première tâche est une tâche de navigation d'itinéraire, les informations de tâche mises à jour en temps réel sont composées d'un sens de virage du dispositif électronique, et le sens de virage du dispositif électronique indique un sens de virage d'un utilisateur ;
le dispositif électronique détermine le fait qu'un sens correspondant à la première zone d'affichage latérale ou à la seconde zone d'affichage latérale est conforme au sens de virage de l'utilisateur ou non ;
le dispositif électronique affiche une interface dynamique indiquant une permission de communication ou une permission d'avance dans la première zone d'affichage latérale et une interface dynamique indiquant une interdiction de passage ou une interdiction d'avance dans la seconde zone d'affichage latérale, si le sens correspondant à la première zone d'affichage latérale est conforme au sens de virage de l'utilisateur ; et
le dispositif électronique affiche l'interface dynamique indiquant une permission de communication ou une permission d'avance dans la seconde zone d'affichage latérale et l'interface dynamique indiquant une interdiction de passage ou une interdiction d'avance dans la première zone d'affichage latérale, si le sens correspondant à la seconde zone d'affichage latérale est conforme au sens de virage de l'utilisateur.

8. Procédé selon la revendication 7, dans lequel l'interface dynamique a au moins une couleur, et l'au moins une couleur comprend le vert ou le rouge.

9. Procédé selon la revendication 7, dans lequel l'image dynamique est une interface fluctuante à onde ou une interface rotative à fil.

10. Support de stockage informatique, dans lequel le support de stockage informatique comprend des instructions informatiques, et, lorsque les instructions informatiques sont exécutées sur un dispositif électronique, le dispositif électronique est en mesure de réaliser le procédé selon l'une quelconque des revendications 7 à 9.
